# EUROPEAN PATENT SPECIFICATION

(11) **EP 2 825 504 B1**
(45) Date of publication and mention of the grant of the patent: **20.04.2016**
(21) Application number: 13708744.1
(22) Date of filing: 28.02.2013
(51) Int. Cl.: C01B 15/023, C01B 15/013

(54) **PLANT FOR HYDROGEN PEROXIDE PRODUCTION AND PROCESS USING IT**
ANLAGE ZUR HERSTELLUNG VON WASSERSTOFFPEROXID UND VERFAHREN DAMIT
INSTALLATION DE PRODUCTION DE PEROXYDE D'HYDROGÈNE ET PROCÉDÉ L'UTILISANT

(30) Priority: 13.03.2012 EP 12159153
(43) Date of publication of application: 21.01.2015
(73) Proprietor: Solvay SA, 1120 Brussels (BE)
(72) Inventor: BLOOMFIELD, Stephen, B-3080 Tervuren (BE); DHAESE, Patrick Markus, 81210-370 Curitiba/PR (BR)
(74) Representative: Vande Gucht, Anne
(86) International application number: PCT/EP2013/054035
(87) International publication number: WO 2013/135491

(56) References cited:
- WO-A1-96/26898
- DE-A1-102008 041 950
- US-A1- 2007 053 829
- Gustaaf Goor ET AL: "Hydrogen Peroxide" In: "Ullmann's Encyclopedia of Industrial Chemistry", 15 April 2007 (2007-04-15), Wiley-VCH Verlag GmbH & Co. KGaA, Weinheim, Germany, XP055038254, ISBN: 978-3-52-730673-2 page 401, left-hand column - page 409, left-hand column

## Description

The present invention relates to a new plant design for producing hydrogen peroxide, especially for producing aqueous hydrogen peroxide solutions, and in particular for direct use in an industrial application. The new plant design is suitable for manufacturing hydrogen peroxide by the anthraquinone autoxidation process (AO-process).

The production of hydrogen peroxide as such is well known. Hydrogen peroxide can be produced by various methods, e.g. by direct hydrogenation of oxygen (direct synthesis) or more commonly by the so-called anthraquinone autoxidation process (AO-process). The present invention particularly relates to a new plant design for the more common industrial AO-process.

Hydrogen peroxide is one of the most important inorganic chemicals to be produced worldwide. The world production of hydrogen peroxide grew to 3.2 million metric tons (100 % H₂O₂) in 2009. Its industrial application includes textile, pulp and paper bleaching, paper recycling, organic synthesis (propylene oxide), the manufacture of inorganic chemicals and detergents, environmental and other applications. In the context of the present invention the industrial application pulp and paper bleaching, mining or environmental applications are of particular interest.

Hydrogen peroxide production is performed by a few chemical companies that produce it in large scale plants as an up to 50 - 70 percent concentrate in water (% by weight). Because of the highly oxidative characteristics of that level of concentration hydrogen peroxide usually is adjusted to a 50 percent concentration for safe handling and transport, and 70 percent concentrates normally are used only for transport over large distance due to cost reasons. For safety reasons the hydrogen peroxide product is normally diluted to at least 50 % before application, but for most applications it will be applied in a concentration of below 15 %. In order to minimize operations, the dilution to the effective concentration normally occurs within the application itself by adding the appropriate amount of a higher concentrated solution of usually not more than 50 % hydrogen peroxide. Ultimately, hydrogen peroxide is used in various concentrations depending on the application, e.g. in a variety of applications hydrogen peroxide is used in a concentration of approximately 1 - 15 percent. Some particular examples of such hydrogen peroxide concentrations (% by weight) are, depending on the kind of industrial application: pulp bleaching 2 - 10 %; waste water oxidation 1 - 5 %; consumer products surface cleaning 1 - 8 %. In other applications such as disinfection the hydrogen peroxide concentration may be higher, e.g. in aseptic packaging typical concentrations may be 35 % or 25 %.

Thus, hydrogen peroxide is typically produced using a cyclical anthraquinone process (AO-process) comprising the hydrogenation of anthraquinone working solution in a catalytic reactor and the oxidation of the hydrogenated anthraquinone working solution by air in a multi-stage packed bed or sieve plate tower while simultaneously producing hydrogen peroxide in the organic stream, with the consecutive extraction of the hydrogen peroxide from the anthraquinone working solution by water in a multistage counter-current extraction column process. The organic solvent of choice is typically a mixture of two types of solvents, one being a good solvent of the quinone derivative (usually a mixture of aromatic compounds) and the other being a good solvent of the hydroxyquinone derivative (usually a long chain alcohol or cyclic ester). Next to said main AO-process steps, there may be other ancillary process steps involved, such like the separation of the hydrogenation catalyst from the working solution; the recovery and polish purification of the anthraquinone working solution, the accompanying solvents, and their recycle to the hydrogenator; and the recovery, polish purification and stabilization of the hydrogen peroxide product.

This AO-process utilizes alkylanthraquinone compounds, such as 2-ethylanthraquinone, 2-amylanthraquinone, and their 5,6,7,8-tetrahydro derivatives as the working compounds dissolved in a suitable organic solvent or mixture of organic solvents. These solutions of alkylanthraquinones are referred to as working solutions. In the first stage of the anthraquinone process (hydrogenation step), the working solution is subjected to hydrogenation in order to reduce the working compounds to their hydrogenated form, the alkylhydroanthraquinones. The hydrogenation of the working compounds is accomplished by mixing hydrogen gas with the working solution and contacting the resulting solution with an appropriate hydrogenation catalyst. In the second stage of the cyclical AO-process (the oxidation step), the hydrogenated working compounds, i.e. the alkylhydroanthraquinones, are oxidized using oxygen, air, or a suitable oxygen containing compound in order to produce hydrogen peroxide and restore the working compound to its original form. The hydrogen peroxide produced in the oxidation step is then removed from the working solution, typically by extraction with water, and the remaining working solution containing the alkylanthraquinones is recycled to the hydrogenation step to again commence the process. The hydrogenation step may be carried out in the presence of a fluid-bed catalyst or a fixed-bed catalyst. Either method is known to have its particular advantages and disadvantages.

In a fluid-bed hydrogenation reactor, good contact between the three phases therein is obtained and thus the productivity and selectivity are generally high. However, the catalyst particles can be broken down by abrasion and can block the filters needed to separate the suspended catalyst and the hydrogenated working solution. This kind of reactor is also subject to back mixing. So, the use of suspended catalyst frequently requires the use of a larger hydrogenation reactor and expensive filtration sector to obtain a fully hydrogenated form.

In the fixed-bed hydrogenation reactor the catalyst does not abrade as much as the fluid-bed reactor and, if operated in a concurrent flow, does not result in back-mixing. But the reaction rate of a fixed-bed hydrogenation reactor is limited by the relatively slow rate of dissolution of hydrogen from the gas phase into the working solution, and also by the proportionally lower Pd surface per unit weight of a fixed bed versus a fluid bed catalyst. Therefore, to dissolve the required quantity of hydrogen necessary to thoroughly reduce all of the working compounds, the working solution has normally to be recycled several times. Thus, a very large recycle stream and a correspondingly large hydrogenation reactor are required, and thus adding to the capital costs of the process. In addition, the recycling of the hydrogenated solution results in over-hydrogenation of the working compounds so that they are ineffective in the overall process.

A special kind of fixed-bed reactors are the so-called trickle-bed reactors which are generally known in the literature (see e. g. NG K. M. and CHU C. F. Chemical Engineering Progress, 1987, 83 (11), p. 55-63). Although the trickle-bed reactors are primarily used in the petroleum industry for hydrocracking, hydrodesulfurization, and hydrodenitrogenation, and in the petrochemical industry for hydrogenation and oxidation of organic compounds, nevertheless, the trickle-bed hydrogenation reactor is also found in some versions of the AO-process for the manufacture of hydrogen peroxide. The term trickle-bed is used here to mean a reactor in which a liquid phase and a gaseous phase flow concurrently downward through a fixed bed of catalyst particles while the reaction takes place. Current practice in operating the trickle-bed reactor still relies mainly on empirical correlations between parameters such as pressure drop, dispersion coefficients, heat and mass transfer coefficients and flow rates of both gas and liquid. From the literature it is also known to operate trickle-bed reactors under different flow patterns such like "trickling", "pulsing", "spray", "bubble" and "dispersed bubble". One of the major problems in the use of the trickle-bed, especially in the trickle-flow regime, is the possibility of channeling in the fixed-bed hydrogenation reactor.

The before described AO-processes based on the original Riedel-Pfleiderer concept are designed for the industrial large-scale and even up to mega-scale production of hydrogen peroxide. Thus, conventional hydrogen peroxide production processes are normally carried out in large- to mega-scale hydrogen peroxide production plants with production capacities of about 40,000 to 330,000 (metric) tons of hydrogen peroxide per year. Thus, currently there are plants in industrial operation with a production capacity of e.g. 40 to 50 kilo tons per year (ktpy) at the low end, with a capacity of up to 160 ktpy, and the world largest mega-plants provide a capacity of 230 ktpy (Antwerp) and 330 ktpy (Thailand). In these processes, normally the production capacity in case of fixed beds is limited to 50 ktpy and usually plants with production capacities above 50 ktpy are operated with fluid-bed reactors.

These conventional AO-processes and respective production plants are complicated and require many and large installments of equipment, a number of competent staff for maintenance of the equipment and operation of the main and ancillary process steps, and special safeguards to handle the resulting hydrogen peroxide in its usually high concentrations of 40 percent, and the further concentration to 50 to 70 percent. Hence, much management attention and frequent maintenance is required. In addition to the complexity of such large- to mega scale production processes, it is noted that a substantial part of the produced hydrogen peroxide needs to be transported, e.g. by train or truck, to be used by customers in their own industrial applications. Such transports by train and truck need special precautions in view of related safety and security issues.

On the other hand a variety of the customers' industrial applications of hydrogen peroxide do not require highly concentrated hydrogen peroxide solutions for their applications, and therefore, as already explained above, the hydrogen peroxide solutions which were concentrated for the purpose of an economic transportation, usually to a hydrogen peroxide concentration of about 50 percent, are only used in a lower concentration of e.g. 1 to 15 percent at the customer site for its specific local application, e.g. particularly for the use in the pulp and paper industry or the textile industry, or for use in the mining industry or for environmental applications.

Furthermore, the current large scale hydrogen peroxide AO-processes according to the Riedel-Pfleiderer concept typically are highly capital- and energy-intensive processes, and the costs associated with them are passed on to low-volume end users. These end users would benefit from methods for producing hydrogen peroxide more economically without the concomitant capital costs and handling problems associated with current production schemes in smaller local plant environments close to the end user's site.

The US patent 5,662,878 (issued Sep. 2, 1997 and assigned to the University of Chicago) already discusses the need for a process that would allow effective hydrogen peroxide production in small plant environments at a "host" industrial site. Briefly, the US patent 5,662,878 describes a method for producing hydrogen peroxide comprising supplying an anthraquinone-containing solution ; subjecting the solution to hydrogen to hydrogenate the anthraquinone ; mixing air with the solution containing hydrogenated anthraquinone to oxidize the solution ; contacting the oxidized solution with a hydrophilic membrane to produce a permeate ; and recovering hydrogen peroxide from the permeate. The proposed method for producing hydrogen peroxide claims as a feature the utilization of membrane technologies to isolate hydrogen peroxide from the process reaction liquid. The focus of the teaching of US patent 5,662,878 is the utilization of the membrane technology for producing hydrogen peroxide that is virtually free of organics, and the ability to retain expensive organic solvents in reaction liquors for reuse.

According to the US patent 5,662,878 the Riedel-Pfleiderer AO-processes are considered unsuitable for small scale production and medium scale production. This is believed because the packed tower used for oxidation, and the column for hydrogen peroxide extraction are very large and do not easily scale up or down for modularity and operational flexibility. Also, typical extractors are multi-stage, very large in volume and are deemed difficult to scale down and deemed to tend being highly unstable, and thus requiring a high degree of operational control.

Although one might assume that the AO-process may be performed on industrial small-to-medium scale so as to merely satisfy local demand, in the state of the art it is still deemed that such processes require the use of many pieces of equipment, much management attention, and frequent maintenance, and that they are difficult to scale down and difficult to make such processes profitable. Therefore, the industrial production of hydrogen peroxide still relies on large-scale production facilities and related process optimizations. Thus, no small scale industrial production facility (500 - 5,000 metric tons per year) or medium scale industrial production facility (5,000 - 20,000 metric tons per year) is operated up to now. It appears that industry either ignored the industrial potential of small-to-medium scale hydrogen peroxide production facilities or assumed technical and/or economical hurdles to apply such small to medium scale methods for industrially producing hydrogen peroxide, as compared to the well-established large-scale industrial production and available logistics to ship hydrogen peroxide, all despite the required hazardous concentrating by distillation and final concentration of the hydrogen peroxide for the purpose of shipping and the finally required dilution for use at customer site.

Therefore, even today a very high need exists in the art to produce hydrogen peroxide without the concomitant capital costs and handling problems associated with current large-scale to mega-scale production schemes.

The present invention has therefore as an objective to develop new processes and associated new plant designs that would allow effective industrial hydrogen peroxide production in small-to-medium size plant environments, particularly on a customer industrial site, on low-volume end users' sites or other suitable "host" industrial sites. Ideally, as a further objective of the invention, such a small-to-medium scale hydrogen peroxide production in small-to-medium size plant environments should be suitable for being performed in an as modular as possible small-to-medium size AO-process plant which allows for easy assembling and/or exchange of individual equipment parts, simple service and maintenance, simple operations and control. Also, the small-to-medium scale industrial hydrogen peroxide production should allow for being remotely controlled, e.g. from a distant large-scale hydrogen peroxide production site, or any other site where staff optimally trained and experienced regarding the manufacture of hydrogen peroxide by the AO-process can be centralized and the control of the hydrogen peroxide production can be optimized and maintained in more practical and economical manner. Accordingly, in view of the above mentioned objectives, such a small-to-medium industrial hydrogen peroxide AO-process plant, in particular a remotely controlled AO-process plant, should be as modular as possible ("modular mini-AO process plant"), and also provide for the ability of quick start-up, shut-down and turnaround, while also accommodating variability in production rates, and the plant should be as simple and robust as possible to allow for an end user friendly hydrogen peroxide production plant, which may be easily remotely controlled, for instance, from another distant large-scale hydrogen peroxide production site, and which plant stably runs in continuous operation and may be easily supported and maintained with a minimum need forlocal (e.g. on customer site) technical and/or physical intervention, and/or a minimum of disruption or down time in case of service and maintenance.

Particularly, an objective of the present invention is to provide such an industrial technically, operationally and economically feasible small-to-medium AO-process plant design, which preferably allows for a remotely controlled small-to-medium hydrogen peroxide AO-process and is automated to such an extent that it can be easily and safely operated in continuous operation proximal to a site or on-site of an end user or hydrogen peroxide customer industrial application site, and which can be easily supported and maintained with a minimum need forlocal (e.g. on customer site) technical and/or physical intervention and also allows for easy assembling and/or exchange of individual equipment parts, simple service and maintenance.

Therefore, the present invention provides an improved plant suitable to industrially produce hydrogen peroxide on-site especially for the direct use as aqueous hydrogen peroxide in a variety of customers' industrial applications of hydrogen peroxide that do not require highly concentrated hydrogen peroxide solutions for their applications. Usually, the plant of the present invention is designed to produce hydrogen peroxide for the direct use of aqueous hydrogen peroxide solutions in a lower concentration of e.g. 1 to 15 percent (by weight) at the customer site for its specific local application, e.g. particularly for the use in the pulp and paper industry or the textile industry, or for use in the mining industry or for environmental applications. The plant according to the present invention is a modular plant design for performing a mini-AO process for the manufacture of hydrogen peroxide, and in particular of hydrogen peroxide solutions with a concentration in the range of 1 to 15 percent (by weight). The plant may be easily installed at a customer site, because of the transportable size of the majority of the plant units, e.g. the mini-AO plant modules, which are mounted to one or more skids. The modules may be fabricated at a site different from the customer site, or in optional cases it can be fabricated also at the customer site. Thus, the concept of the present invention is to have an installation made of different parts (units or modules) that can each be manufactured in a different location, then transported to the customer's site, assembled together to make the hydrogen peroxide on-site plant. Such a concept is also applied to the mini-AO plants, i.e. to have a mini-plant made of several elements which are easily dismountable, wherein each of the elements can be manufactured in a different remote location, then transported to the mini-plant location where they are in a very simple way assembled together.

Particularly, the invention concerns an industrial modular hydrogen peroxide manufacturing plant wherein hydrogen peroxide can be manufactured by the mini-AO process. The term "modular" will be explained in more detail below and, for example but without limitation, means that the plant comprises one or more modules which can be fabricated at different locations or the same location, and be assembled at e.g. any industrial hydrogen peroxide consuming site or customer plant. The modular plant comprises skid modules for the hydrogenator (hydrogenation skid 1), the oxidizer (oxidizer skid 2), optionally a process air compressor equipment (process air compressor skid 3) and optionally an equipment to recover solvent (solvent recovery unit skid 4), and means to extract hydrogen peroxide (extraction skid 5). However, usually the extraction skid 5 will not carry the extraction column itself, because normally it would be too large to fit within said extraction skid. Thus, normally the extraction skid will include only the ancillary equipment of the extraction column which would be fabricated and transported separately. Skids 3 and 4 would not be necessary if oxygen ("pure" oxygen) were used, e.g. especially where available in bulk supply, e.g. technical grade oxygen.

A list of the major equipment items to be included within each of the denoted skids is given hereunder. The equipment items allocated to each skid usually comprise the following.

In the Hydrogenation Skid : Hydrogenator ; Hydrogen Recycle Compressor ; Catalyst Filter ; Oxidizer Feed Tank ; Oxidizer Feed Pump ; Guard Catalyst Bed.

In the Oxidation Skid : Oxidizer Feed Cooler ; Oxidizer ; Degasser ; Extraction Feed Pump ; Off-Gas Condenser ; Off-Gas Demister.

In the Process Air Compressor Skid : Process Air Compressor Package ; Suction Air Filter ; After Cooler-Condenser.

In the Solvent Recovery Skid : Activated Carbon Adsorption Package ; Regeneration Condenser ; Solvent/Water Decanter ; Solvent Return Pump ; Water Return Pump.

In the Extraction Skid: Extraction Column; Coalescer; Hydrogenator Feed Pump.

The key to the present invention is its modularity to the extent as much as possible. This means that the industrial modular hydrogen peroxide manufacturing plant according to the invention is a plant for the manufacture of hydrogen peroxide, in particular of aqueous hydrogen peroxide solutions, by the mini-AO process which is designed and sized regarding its before mentioned components such that these components, particularly the hydrogenator, the oxidizer, the optional process air compressor and the optional solvent recovery unit, and the means to extract hydrogen peroxide are individual elements (modules) of the overall plant that which allow for pre-fabrication, e.g. at a different site than the site where the plant is finally operated, are transportable and allow for easy assembling and/or exchange of individual equipment parts, simple service and maintenance. Thus, the term "modularity" and equivalent terms like, for example but without limitation, "module", "modular", "modularization" means the possibility and the degree to which the components of a system, e.g. of a device, equipment, tool, building, production facility or even of an industrial plant may be separated and recombined. In essence, modularity therefore refers to an engineering technique that builds larger systems by combining smaller subsystems.

In the context of the present invention "module" or "modular" refers to the concept of modularity and also refers to "modular design", the engineering discipline of designing complex devices using separately designed subcomponents. "Modular design" or "modularity in design" is an approach that subdivides a system into smaller parts (modules) that can be independently created and then used in different systems to drive multiple functionalities. A modular system can be characterized e.g. by the following : a) functional partitioning into discrete scalable, reusable modules consisting of isolated, self-contained functional elements ; b) rigorous use of well-defined modular interfaces, including object-oriented descriptions of module functionality ; c) ease of change to achieve technology transparency and, to the extent possible, make use of industry standards for key interfaces. Besides reduction in cost, e.g. due to lesser customization, and less learning time, and besides flexibility in design, modularity offers other benefits such as augmentation, e.g. adding new solution by merely plugging in a new module, and exclusion.

Thus, the modular design combines the advantages of standardization (high volume normally equals low manufacturing costs) with those of customization, and consequently all of these skids of the AO-process plant are easily interchangeable as long as they use parts that support the same standard interface as the replaced skid and as long as they effectively function in combination with the other skids.

The skilled person will be very familiar with the concept of modularity which is widely used in various technological fields and related to technical systems, and analogously applies to the modular plant of the present invention for the manufacture of hydrogen peroxide. Systems, e.g. a device, tool or fabrication installations are deemed "modular", for example, when they can be decomposed into a number of components that may be mixed and matched in a variety of configurations. The components are able to connect, interact, or exchange resources (e.g. such as materials, agents, energy, data) in some way, by adhering to a standardized interface. Unlike a tightly integrated system whereby each component is designed to work specifically (and often exclusively) with other particular components in a tightly coupled system, modular systems are systems of components that are more "loosely coupled", meaning that they are more flexible with regard to, for example but without limitation, combining, connecting, disconnecting (pre-)fabrication, transportation, assembling and/or exchange of individual system components.

Using "more loosely-coupled" structures enables to achieve greater scope flexibility and scale flexibility. The modules can be switched easily between different manufacturing sites or customers compared to building the AO-process capabilities completely at a site as standard plant. Overall, modularization enables responding to different market needs more quickly and more flexible and quicker reaction to changing general or market conditions.

Therefore, in the context of the present invention, the meaning of the term "modularity" relates to a new industrial plant design for manufacturing hydrogen peroxide by the AO-process, wherein modularity refers to the design and engineering technique to build an AO-process plant for manufacturing hydrogen peroxide as the larger systems by combining the various skids mentioned herein as the smaller subsystems of the overall AO-process plant; or modularity equally refers to the design and engineering technique to build each of the various skids mentioned herein as larger subsystems by combining the appropriate equipment items mentioned herein as even smaller subsystems of each skid.

Modularity also means the use of exchangeable parts or equipment options used in the AO-process, e.g. exchangeable skids or exchangeable equipment items of each skid.

Modularity therefore refers to the construction of the moduls or skids for the AO-process plant, as described herein, by joining together standardized equipment items as mentioned herein to form as larger compositions each skid as described herein. Modularity also covers the principle that an AO-process plant according to the present invention is composed of modules or self-sufficient parts for performing each of the various AO-process steps. Thus, the invention provides a new concept of an AO-process plant, in particular of a mini-AO process plant, wherein the AO-process plant is composed of independent, closed, specific process step modules, e.g. modularity in the context of the invention refers to the construction of a skid by joining together standardized equipment items to form a larger skid, for example but without limitation, the hydrogenation skid, the oxidation skid and the extraction skid, and/or to the use of a such a skid mounted module as a standardized unit related to hydrogen peroxide production capacity and to the corresponding proportion of skids.

A modular AO-process plant (and also modular mini-AO-process plant) generally consists of universal parts (or modules) that can be manufactured in a factory and then shipped to a plant site where they are assembled into a complete AO-process plant arrangement. Therefore, advantageously the modular AO-process plant and in particular any universal part or module thereof, e.g. its reactor systems and other parts, should be (very) compact, meaning that the size and dimensions thereof are adapted to allow for easy mouning on a skid and/or handling during transportation, installation, connecting or disconnecting and/or exchange or replacement.

Thus, the modular design, in particulat the compact modular design, allows building AO-process plants with easily replaceable parts, e.g. the skids that use standardized interfaces. This modular design also allows to upgrade certain aspects of a modular AO-process plant easily without having to reconstruct another AO-process plant altogether.

The modular plant of the present invention provides hydrogen peroxide produced by the autoxidation process (AO-process), in particular an aqueous hydrogen peroxide solution, to an industrial process which applies hydrogen peroxide as agent to perform chemistry in this process which plant comprises as minimum required components skid mounted modules including at least one skid (and preferably at least two) mounted module(s) selected from the group consisting of a hydrogenation skid, an oxidation skid and an extraction skid.

### Short description of the drawings

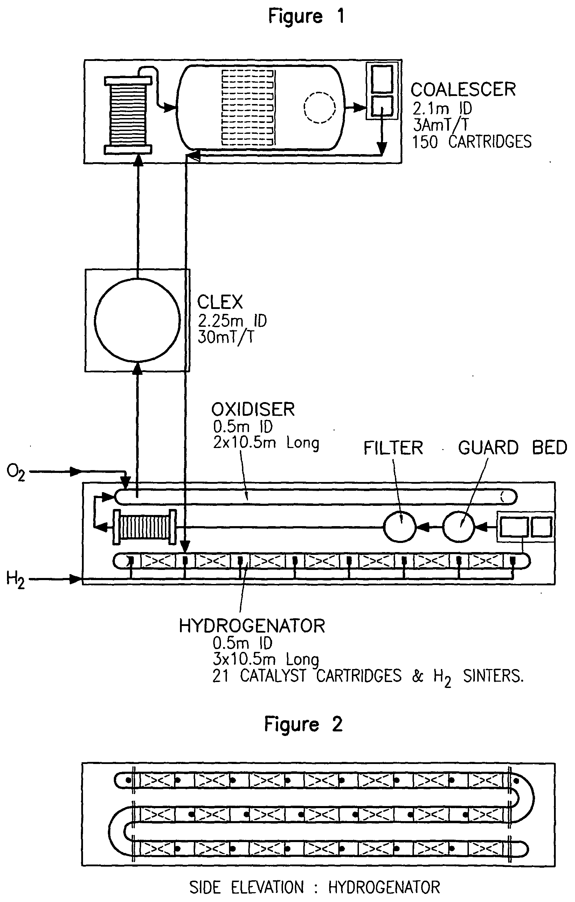

*Figure 1* shows details of an embodiment of a modular plant according to the invention with a useful arrangement of skids, e.g. an arrangement including the main modules: the hydrogenation skid, the oxidation skid and the extraction skid. In this example embodiment of the invention a layout of skid-mounted modules is shown which combines the oxidizer and the hydrogenator on the same skid. The example also shows the coalescer related to the extraction column ("CLEX"). The modular mini-AO-process plant of this example is designed for a hydrogen peroxide production capacity of 7.5 ktpy.
*Figure 2* shows a side evaluation of the hydrogenator which in this example is configured as a fixed bed hydrogenator for liquid phase reaction.

### Detailed description of the invention

In its broadest aspect the present invention provides an industrial technically, operationally and economically feasible plant for the industrial manufacture of hydrogen peroxide, in particular of aqueous hydrogen peroxide solutions, by the autoxidation process (AO-process), which plant is an arrangement of skid mounted modules of various reactors, and optionally utilities, conventionally used in an autoxidation process (AO-process) for the manufacture hydrogen peroxide, for example skids for a hydrogenator (hydrogenation skid), an oxidizer (oxidation skid) and means to extract hydrogen peroxide (extraction skid). This arrangement of skid mounted modules is particularly suitable for a modular small-to-medium sized AO-process plant and the arrangement allows for easy assembling and/or exchange of individual equipment parts (modules, skids), simple service and maintenance, simple operations and control. This aspect of the invention will be referred to in the following as "modular concept" or "modular design".

In more detail the modular plant according to the invention is directed to a plant for production of hydrogen peroxide, in particular of aqueous hydrogen peroxide solutions, by the autoxidation process (AO-process), the process comprising hydrogenating an anthraquinone in a working solution, oxidizing the hydrogenated anthraquinone with oxygen to form hydrogen peroxide and extracting the hydrogen peroxide from the working solution, the plant comprising at least one skid mounted module selected from the group consisting of
- a skid mounted module comprising at least one hydrogenator (hydrogenation reactor) to hydrogenate the anthraquinone in the working solution, denoted as skid 1 (hydrogenation skid) ;
- a skid mounted module comprising at least one oxidizer (oxidation reactor) to oxidize the hydrogenated anthraquinone with oxygen to form hydrogen peroxide, denoted as skid 2 (oxidizer skid) ;
- optionally a skid mounted module comprising at least one means to compress air (process air compressor), denoted as skid 3 (process air compressor skid), to feed oxygen, in particular oxygen from the air, into an oxidizer of skid 2, and in case of presence of skid 3 a further skid mounted module comprising at least one means to recover the solvent (solvent recovery unit), denoted as skid 4 (solvent recovery unit skid), in particular if oxygen from the air is used to feed oxygen into an oxidizer of skid 2 ;
- a skid mounted module comprising at least one means to extract the hydrogen peroxide from the working solution (extraction unit), denoted as skid 5 (extraction skid) ;
- a skid mounted module, denoted as skid 6, comprising at least one means to deliver hydrogen peroxide solution to the point of use and/or optionally to a storage tank optionally with additional means for adjusting the hydrogen peroxide concentration.

In brief, the modular plant according to the invention may comprises five main skid mounted modules, a hydrogenator mounted on the skid 1, an oxidizer mounted on the skid 2, a process air compressor mounted on the skid 3, a solvent recovery unit mounted on skid 4 and extraction equipment (means to extract hydrogen peroxide) mounted on skid 5, and a skid mounted module (skid 6) with means for delivery of hydrogen peroxide solution to the point of use and/or optionally to a storage tank. These modules may be mounted on separate individual skids or alternatively it is possible to combine certain modules on the same skid. Thus, the hydrogenator and the oxidizer, for example, may be mounted each on separate skids, a hydrogenation skid 1 and an oxidation skid 2, or alternatively the hydrogenator and the oxidizer may be mounted together on the same skid, the denoted as combined hydrogenation/oxidation skid 1-2. Particularly, this combination option skid 1-2 may be the case where intensified hydrogenation and oxidation reactors are used; hydrogenation and/or oxidation related ancillary equipment then usually may be installed within the same skid 1-2. In case of the extraction skid 5, depending on the size and capacity of the modular AO-process plant, optionally the extraction skid 5 may have an extraction column of smaller size and/or usually just is connectable to at least one, especially larger sized, extraction column. However, normally the extraction column will be too large to fit within the extraction skid 5, and in this case it will carry only ancillary means for the extraction of hydrogen peroxide, but will be connectable to at least one extraction column. Also, it is possible to combine all or part of the any ancillary means normally used in the manufacture of hydrogen peroxide by the AO-process in the same skid, if so wished and if capacity and overall circumstances at a plant site allow.

Furthermore, some modules may not be required depending on the conditions of the overall autoxidation process (AO-process) and the specific arrangement of the plant. For example in the oxidation step, the hydrogenated working compounds, i.e. the alkylhydroanthraquinones, can be oxidized using ("pure") oxygen, air, oxygenated air, or a suitable oxygen containing compound in order to produce hydrogen peroxide and restore the working compound to its original form. Now, skids 3 and 4 would not be necessary if, for example, ("pure") oxygen were used in the oxidation step, e.g. in case of a site where oxygen is available in bulk supply, because under such condition and arrangement of a ("pure") oxygen supply no process air compressor skid and no solvent recovery skid would be required.

The terms "oxygen" or "pure oxygen" in the present context mean a gaz essentially consisting of oxygen, usually oxygen of technical grade or oxygen with a purity of bulk supply oxygen as normally understood by those skilled in the art, with only minor other gaz constituents, and in a composition compatible with for example the catalyst and working solution. Thus, normally such "pure" oxygen will have a purity of at least 90 vol.-%, preferably of at least 95 vol.-%, more preferably of at least 97 vol.-%, and most preferably of at least 99 vol.-%. In case the oxygen purity is of at least 90 vol.-%, then there is no need for a Process Air Compressor skid and no need for a Solvent Recovery skid.

A list of the major equipment items to be included within each skid of a plant for production of hydrogen peroxide, especially of aqueous hydrogen peroxide solutions, by the autoxidation process (AO-process) according to the present invention is given hereunder, e.g. the equipment items allocated to each skid, for example: the hydrogenation skid 1, oxidation skid 2, the optional process air compressor skid 3, the optional solvent recovery skid 4, and the extraction skid 5. The meaning of terms used for the typical equipment and utilities for the manufacturing of hydrogen peroxide by the autoxidation process, e.g. terms like "hydrogenator", "oxidizer", "extractor", "extraction", "catalyst", "working solution", "hydrogen", "oxygen", "pure oxygen" "pure oxygen in bulk supply", "air", "process air", "oxygenated air", and the functioning of such equipment and utilities, is well known to those skilled in the art, as well as for related ancillaries.

As described, skid 6 comprises at least one means to deliver hydrogen peroxide solution to the point of use and/or storage tank. Normally the produced aqueous hydrogen peroxide solution can be directly delivered from skid 6 to a point of use, but under circumstances it might be useful to collect all or a portion of the crude hydrogen peroxide solution in a storage tank before further delivery to the actual point of use. This may for example be in case of downtime or of reduced consumption by the hydrogen peroxide utilizing application. Or this may be to compensate for downtime or reduced hydrogen peroxide production, e.g. in case of maintenance activities related to the modular hydrogen peroxide AO-process plant. Thus, optionally, the modular plant according to the invention for the production of (aqueous) hydrogen peroxide (solutions) by the autoxidation process (AO-process) may foresee a product storage tank for the storage of produced crude hydrogen peroxide solution. However, this storage tank would not be mounted on a skid, as this product storage tank would be too large to fit on a skid, and so this would normally be built on site. The storage tank, of course, would also be equipped with product delivery pumps, and optionally may also be equipped with additional means for adjusting the hydrogen peroxide concentration, like on skid 6. The person skilled in the art is well aware of any equipment, ancillaries, materials and the like that might be needed to set up, operate and maintain such a storage tank, as well as about related operating conditions.

Instead of providing a separate analysis skid for the plant, but which may be foreseen if so wished, it is envisaged that the analysis, for example but without limitation, of the hydrogen peroxide solution or the working solution, usually will be done only occasionally as deemed appropriate by the skilled person, in a small section of the porta-cabin housing the control (e.g. mini-DCS) and interlock hardware (e.g. safety PLC), motor control centre (MCC) and operator station. The person skilled in the art is well aware of any equipment, ancillaries, materials and the like that might be needed to set up, operate and maintain such means for the analysis.

In this aspect of the invention the modular AO-process plant comprises specific safety equipment or safety means (interlock system) to allow for automatic safe shutdown in case of incidents that require interruption of the hydrogen peroxide production for e.g. for safety reasons or other deficiencies with regard to the process or utilities, to the equipment, sensors, computers, communication network and the like. In such case the modular AO-process plant is controlled by a computer which will include a safety PLC (independent protection layer) or hardwired relay based system for the monitoring and automatic safe shutdown of the plant in case of abnormalities (interlock system). In such cases, a beep or cell phone message could be sent to the local operator in charge of the plant, which could then enter the plant at a convenient time (maybe the next day; as the plant can be provided with intermediate product storage, the client or consumer will not be affected) in order to restart the plant safely (e.g. in this case of automatic safe shutdown no remote startup must be foreseen).

Normally there will also be means for drawing off used working solution from the autoxidation process and means for feeding fresh working solution into the autoxidation process. There is not necessarily a specific separate skid required for such means, which may be integrated on the same or on a different skid as denoted above as skids 1 to 6. For example but without limitation, from time to time (e.g. without limitation periodical like monthly, quarterly or annually) the emptying and replenishing of working solution can be done directly into and from ISO-containers without need for intermittent storage. Despite there is no need for providing a separate skid or module for empting or replenishing the plant, such equipment may be foreseen if so wished. The person skilled in the art is well aware of any equipment, ancillaries, materials and the like that might be needed to set up, operate and maintain such means for the emptying and/or replenishing of the AO-process plant.

Despite there is no need for providing a separate skid for intermittent storage of fresh working solution and/or for used working solution, under circumstances it might be useful to collect all or a portion of the used working solution in a storage tank and/or to have fresh working solution ready for use in a storage tank before filling it into the AO-process plant.

Thus, optionally, the modular plant according to the invention for the production of (aqueous) hydrogen peroxide (solutions) by the autoxidation process (AO-process) may foresee such a storage tank for either at least one or for both, the used working solution and the fresh working solution. However, such a storage tank would generally not be mounted on a skid, as it would be too large to fit on a skid, and so such storage tanks normally would be site-fabricated. The storage tank, of course, would preferably also be equipped with pumps, and optionally may also be equipped with other required ancillary means. The person skilled in the art is well aware of any equipment, ancillaries, materials and the like that might be needed to set up, operate and maintain such a storage tank for the used and/or fresh working solution, as well as about related operating conditions. Alternatively, it will be also possible to engage one or more mobile storage tank or liquid containers, for example a road tanker or a train freight car suited to safely transport large quantities of industrial liquids.

Analogously, as described above for the analysis equipment, instead of providing a separate a skid mounted module comprising one or more means to operate the skid mounted modules of the AO-process plant, but which may be foreseen if so wished, it is envisaged that the operation and control equipment, materials and ancillaries would also be in the form of a porta-cabin. The person skilled in the art is well aware of any equipment, ancillaries, materials and the like that might be needed to set up, operate and maintain such means for the operation and control of an AO-process plant.

Optionally the skid mounted modules employed in the context of the present invention may be complemented and/or supplemented by additional installations comprising one or more means for providing utilities and/or other ancillaries commonly employed in the autoxidation process as appropriate.

In the embodiments of a plant for production of (aqueous) hydrogen peroxide (solutions) by the autoxidation process (AO-process) according to the present invention, the hydrogenation skid 1 normally comprises at least one or more equipment items selected from the group of Hydrogenator, Hydrogen Recycle Compressor, Catalyst Filter, Oxidizer Feed Tank, Oxidizer Feed Pump and Guard Catalyst Bed.

Herein, the meaning of terms used for said equipment items of the Hydrogenation Skid and functioning of such equipment and of utilities used therein, as well as for related ancillaries, is well known to those skilled in the art.

For example, the Hydrogenator is understood as reactor or reactor system (hydrogenation unit) for hydrogenating a working solution in the presence of a catalyst, wherein said working solution contains at least one anthraquinone, normally an alkylanthraquinone, dissolved in at least one organic solvent, to obtain at least one corresponding anthrahydroquinone compound, normally an alkylanthrahydroquinone compound. Next to this main component of the hydrogenation skid, a Hydrogen Recycle Compressor can be included, as well as a Catalyst Filter to avoid transition of potentially abraded catalyst into the oxidizer, the Oxidizer Feed Tank, the Oxidizer Feed Pump and the Guard Catalyst Bed as shown in Fig. 1.

The hydrogenation in the hydrogenator may be performed in a conventional manner with a typical hydrogenation catalyst suited for a process for the manufacture of hydrogen peroxide by the Riedel-Pfleiderer AO-process and its variants. Typical hydrogenating catalysts known for the anthraquinone cyclic process can be used as catalysts in the hydrogenation stage, for instance, such as noble metal catalysts containing one or more noble metals from the series Pd, Pt, Ir, Rh and Ru. The catalysts known for the anthraquinone cyclic process can be in the form of fixed- bed catalysts or in the form of suspended catalysts, suspended catalysts being able to be used both in the form of an unsupported catalyst, e. g. palladium black or Raney nickel, and in the form of a supported suspended catalyst. While other catalytic metals may be used, for the purpose of the invention it was found that hydrogenation catalyst shall preferably comprise palladium (Pd) as the catalytic metal, preferable in combination with silver (Ag), and that such catalysts shall be used in the hydrogenation step. Palladium and palladium/silver catalysts are known to the ordinary skilled artisan, and Pd as well as Pd/Ag-catalysts optimized for the AO-process are described in the state of the art. As an example for a typical Pd/Ag hydrogenation catalyst composition reference is made to WO 98/15350 (Solvay Interox) which describes a Pd/Ag catalyst composition of 0.5-2.5 % by wt. Pd and 0.5-2.5 % by wt. Ag, and which is used in a process for the manufacture of hydrogen peroxide by the anthraquinone process.

The hydrogenator may be operated with a fixed-bed catalyst of a Pd/Ag combination as the catalytic metal. In an alternative variant the hydrogenator may also be operated with a slurry catalyst. The fixed-bed catalyst usually consists of a packing of solid hydrogenation catalyst particles. It is generally desirable that the average diameter of these particles should be in the range of from about 0.2 to 10 mm. In a preferred embodiment of the process according to the invention the catalyst granules in the fixed bed have an average particle diameter of from 1 to 5 mm. Preferably, the catalyst of a Pd/Ag combination displays high initial selectivity and long-term stability outweighing the higher costs compared to a slurry catalyst. Productivities may be improved and/or costs (carrier/manufacture) may decreased by using lower particle sizes (e.g. 1-2 mm).

In the embodiments of a plant for production of (aqueous) hydrogen peroxide (solutions) by the autoxidation process (AO-process) according to the present invention, the oxidizer skid 2 normally comprises at least one or more equipment items selected from the group of Oxidizer Feed Cooler, Oxidizer, Degasser, Extraction Feed Pump, Off-Gas Condenser and Off-Gas Demister. Herein, the meaning of terms used for said equipment items of the Oxidizer Skid and functioning of such equipment and of utilities used therein, as well as for related ancillaries, is well known to those skilled in the art.

For example, the Oxidizer is understood as reactor or reactor system (oxidation unit) for oxidizing said at least one anthrahydroquinone compound, normally an alkylanthrahydroquinone compound, resulting from the hydrogenator with oxygen or an oxygen comprising gaz back into the corresponding anthrahydroquinone, normally alkylanthrahydroquinone compound, and thereby to obtain hydrogen peroxide.

The oxidation step in the Oxidizer is following the previous step of hydrogenating the working compound dissolved in the in the working solution. In the oxidation step, the hydrogenated working compounds, i.e. the alkylhydroanthraquinones, are oxidized using oxygen, air, oxygenated air, or a suitable oxygen containing compound in order to produce hydrogen peroxide and restore the working compound to its original form. The oxidation may take place in a conventional manner as known for the AO-process. Typical oxidation reactor types known for the anthraquinone cyclic process can be used for the oxidation. Bubble reactors, through which the oxygen-containing gas and the working solution are passed co-currently or counter-currently, are frequently used. The bubble reactors can be free from internal devices or preferably contain internal devices in the form of packing or sieve plates. Oxidation can be performed at a temperature in the range from 30 to 70 °C, particularly at 40 to 60 °C. Oxidation is normally performed with an excess of oxygen, so that preferably over 90 %, particularly over 95 %, of the alkyl anthrahydroquinones contained in the working solution in hydroquinone form are converted to the quinone form. For example, the oxidation may be performed in any type of oxidation reactor, e.g. such as CSTRs (continuous stirred tank reactor), but other forms of oxidation reactors may be applied, too. The oxidation reactor preferably has the advantage of being (very) compact and of showing good performance, e.g. in terms of selectivity and productivity. Optionally, the oxidation reactor may have been subjected to protection measures against corrosion, before being placed into the production and/or during the production. In view of the extraction step following the oxidation, water addition may be beneficial already in the mini-AO-process oxidation step.

The hydrogen peroxide produced in the oxidation step in the Oxidizer is then removed from the working solution, typically by extraction with water, and the remaining working solution containing the alkylanthraquinones in their original form is preferably recycled to the hydrogenation step to again perform the process. Hence, in this preferred embodiment, the process is a loop process. In the embodiments of a plant for production of hydrogen peroxide, preferably of aqueous hydrogen peroxide solutions, by the autoxidation process (AO-process) according to the present invention, the extraction skid 5 for the means to extract hydrogen peroxide normally comprises at least one or more equipment items selected from the group of Cooler, Coalescer and Hydrogenator Feed Pump, and optionally an Extraction Column and/or being connectable to an Extraction Column. Depending on the size and capacity of the modular AO-process plant the extraction skid 5 may have an extraction column of smaller size and/or alternatively is connectable to at least one, especially larger sized, extraction column. Normally the extraction column will be too large to fit within the extraction skid 5, and in this case skid 5 will carry only ancillary means for the extraction of hydrogen peroxide, but will be connectable to at least one extraction column. Herein, the meaning of terms used for said equipment items of the Extraction Skid and functioning of such equipment and of utilities used therein, is well known to those skilled in the art, as well as for related ancillaries.

The Extraction Column is understood as a system for extracting the hydrogen peroxide, which is formed in the Oxidizer, with water from the working solution to result in a crude aqueous hydrogen peroxide solution. The Coalescer is understood as a technological device performing coalescence. A coalescer is primarily used to separate emulsions into their components via various processes and is operating in reverse to an emulsifier.

In the embodiments of a plant for production of hydrogen peroxide, preferably of aqueous hydrogen peroxide solutions, by the autoxidation process (AO-process) according to the present invention, the optional process air compressor skid 3 normally comprises at least one or more equipment items selected from the group of Process Air Compressor Package, Suction Air Filter and After Cooler-Condenser. Herein, the meaning of terms used for said equipment items of the Process Air Compressor Skid and functioning of such equipment and of utilities used therein, is well known to those skilled in the art, as well as for related ancillaries.

In the embodiments of a plant for production of hydrogen peroxide, preferably of aqueous hydrogen peroxide solutions, by the autoxidation process (AO-process) according to the present invention, the optional solvent recovery unit skid 4 normally comprises at least one or more equipment items selected from the group of Activated Carbon Adsorption Package, Regeneration Condenser, Solvent/Water Decanter, Solvent Return Pump and Water Return Pump. Herein, the meaning of terms used for said equipment items of the Solvent Recovery Skid and functioning of such equipment and of utilities used therein, is well known to those skilled in the art, as well as for related ancillaries.

Those skilled in the art are also very familiar with the principles of the autoxidation process (AO-process) for the manufacturing of hydrogen peroxide, e.g. besides the typical equipment, ancillaries and utilities for the manufacturing of hydrogen peroxide by the autoxidation process, also the process chemistry, the process operation, analysis and control and the handling of the hydrogen peroxide product, as well as the related ancillary processes, are well known to those skilled in the art. Therefore, the person skilled in the autoxidation process (AO-process) for manufacturing hydrogen peroxide may easily perform such an AO-process in the modular plant according to the invention. This means that also in the modular plant according to the present invention, as described above, in a first step a working compound, for example an anthraquinone, particularly an alkylanthraquinone, which is dissolved in a solvent (e.g. together called working solution) is hydrogenated with elemental hydrogen in the presence of a catalyst. After the hydrogenation of the working compound dissolved in the in the working solution, the next process step of the cyclical mini-AO-process is the oxidation step. In the oxidation step, the hydrogenated working compounds, i.e. the allcylhydroanthraquinones, are oxidized using oxygen, air, oxygenated air, or a suitable oxygen containing compound in order to produce hydrogen peroxide and restore the working compound to its original form. The hydrogen peroxide produced in the oxidation step is then removed from the working solution, typically by extraction with water, and the remaining working solution containing the alkylanthraquinones in their original form is recycled to the hydrogenation step to again commence the process.

It was already mentioned above that, depending on the type of oxidizing agent, the modular plant according to the present invention may comprise all the skids 1 to 6 or that alternatively the skids 3 (Process Air Compressor Skid) and 4 (Solvent Recovery Skid) would be void if "oxygen" or "pure oxygen" were used as the oxidizing agent.

Thus, in one embodiment the invention, e.g. in case of using air, oxygenated air or oxygen with a purity of less than 90 vol.-% oxygen, the invention pertains to a plant for production of hydrogen peroxide, particularly of aqueous hydrogen peroxide solutions, by the autoxidation process (AO-process) comprising an oxygen from the air supply unit used to feed oxygen into an oxidizer of skid 2 and further comprising at least one skid mounted module selected from the group consisting of
- a skid mounted module comprising at least one hydrogenator (hydrogenation reactor) to hydrogenate the anthraquinone in the working solution, denoted as skid 1 (hydrogenation skid) ;
- a skid mounted module comprising at least one oxidizer (oxidation reactor) to oxidize the hydrogenated anthraquinone with oxygen to form hydrogen peroxide, denoted as skid 2 (oxidizer skid) ;
- a skid mounted module comprising at least one means to compress air (process air compressor), denoted as skid 3 (process air compressor skid), to feed oxygen, in particular oxygen from the air, into an oxidizer of skid 2, and comprising a further skid mounted module comprising at least one means to recover the solvent (solvent recovery unit), denoted as skid 4 (solvent recovery unit skid) ;
- a skid mounted module comprising at least one means to extract the hydrogen peroxide from the working solution (extraction unit), denoted as skid 5 (extraction skid) ;
- a skid mounted module, denoted as skid 6, comprising at least one means to deliver hydrogen peroxide solution to the point of use and/or optionally to a storage tank optionally with additional means for adjusting the hydrogen peroxide concentration.

Optionally, also in this variant of the invention, the skid mounted modules employed in the context of the present invention may be complemented and/or supplemented by additional installations comprising one or more means for providing ancillaries and/or utilities commonly employed in the autoxidation process as appropriate.

In another embodiment the invention, e.g. in case of using "oxygen" or "pure oxygen", e.g. oxygen with a purity of at least 90 vol.-% oxygen, the invention pertains to a plant for production of hydrogen peroxide, preferably of aqueous hydrogen peroxide solutions, by the autoxidation process (AO-process) comprising a ("pure") oxygen supply unit used to feed oxygen into an oxidizer of skid 2 and further comprising at least one skid mounted module selected from the group consisting of
- a skid mounted module comprising at least one hydrogenator (hydrogenation reactor) to hydrogenate the anthraquinone in the working solution, denoted as skid 1 (hydrogenation skid) ;
- a skid mounted module comprising at least one oxidizer (oxidation reactor) to oxidize the hydrogenated anthraquinone with oxygen to form hydrogen peroxide, denoted as skid 2 (oxidizer skid) ;
- a skid mounted module comprising at least one means to extract the hydrogen peroxide from the working solution (extraction unit), denoted as skid 5 (extraction skid) ;
- a skid mounted module, denoted as skid 6, comprising at least one means to deliver hydrogen peroxide solution to the point of use and/or optionally to a storage tank optionally with additional means for adjusting the hydrogen peroxide concentration.

Optionally, also in this variant of the invention, the skid mounted modules employed in the context of the present invention may be complemented and/or supplemented by additional installations comprising one or more means for providing ancillaries and/or utilities commonly employed in the autoxidation process as appropriate.

The embodiments of the present invention concerning a modular concept or modular design of a plant for the production of hydrogen peroxide, preferably of aqueous hydrogen peroxide solutions, by the autoxidation process (AO-process) is particularly suitable to be realized as a hydrogen peroxide production facility which is located at a customer or host site where hydrogen peroxide is consumed in a customer's or in a host site's industrial process, and insofar the modular plant according to the present invention differs from conventional large-to-mega scale plants for the production of hydrogen peroxide, which are usually hydrogen peroxide plants providing for a larger hydrogen peroxide production capacity of at least 30 kilo tons per year, and more usually of at least 40 kilo tons per year.

As compared to conventional large scale hydrogen peroxide production plants, the modular plant according to the invention is simplified and automated as much as possible in order to allow for being easily and safely operated and remotely controllable, such that it stably runs in continuous operation proximal to or on-site of an end user or hydrogen peroxide customer industrial application site, and such that it can be easily supported and maintained with a minimum need forlocal (e.g. on customer site) technical and/or physical intervention.

Surprisingly, it was found that such a modular plant for the hydrogen peroxide production proximal to or on-site of a hydrogen peroxide using customer ("host" site) may be achieved if the modular plant design and the AO-process therein is sized to a small-to-medium scale hydrogen peroxide production capacity. Thus, the modular plant of the invention is particularly suitable for the manufacture of hydrogen peroxide by the AO-process with a small-to-medium scale production capacity of hydrogen peroxide of up to 20 kilo tons per year (ktpy) i.e. of maximum 20 ktpy. Preferably the modular plant of the invention is designed for a production capacity of hydrogen peroxide of up to 15 kilo tons per year (ktpy), and more preferably with a production capacity of hydrogen peroxide of up to 10 kilo tons per year (ktpy). The abbreviation "ktpy" in the context of the present invention means the dimension kilo tons per year and relates to metric tons. Further, said small-to-medium-scale hydrogen peroxide production process scale will be referred to in the following as (modular) "mini-AO-plant" and (modular) "mini-AO-process", respectively.

Consequently, in a preferred embodiment the invention pertains to a plant for production of hydrogen peroxide, particularly of aqueous hydrogen peroxide solutions, by the autoxidation process (AO-process) wherein the hydrogenation skid 1, oxidation skid 2 and extraction skid 5 together with any optional skid are designed as a modular reactor system, preferably as a compact modular reactor system, which is configured to operate as a small-to-medium scale AO-process with a production capacity of hydrogen peroxide of up to 20 kilo tons per year (ktpy), preferably with a production capacity of hydrogen peroxide of up to 15 kilo tons per year, and more preferably with a production capacity of hydrogen peroxide of up to 10 kilo tons per year (ktpy).

Another advantage of the (modular) "mini-AO-plant" according to the present invention is that the modular plant can be designed with or in particular without a reversion unit, e.g. without a permanent reversion unit, which is usually mandatory in plants with large-to-mega scale hydrogen peroxide production capacity.

Therefore, a further embodiment of the invention is directed to a plant for production of hydrogen peroxide, particularly of aqueous hydrogen peroxide solutions, by the autoxidation process (AO-process) wherein the hydrogenation skid 1, oxidation skid 2 and extraction skid 5 together with any optional skid are designed as a modular reactor system, preferably a compact modular reactor system, which is configured to operate without a reversion (regeneration) unit, preferably configured to operate without a permanent reversion (regeneration) unit, and wherein the working solution and/or the catalyst are replaced and/or treated for regeneration or reactivation only intermittently or periodically with a low frequency as defined below.

Preferably, in this variant of the invention without a reversion (regeneration) unit, in particular without a permanent reversion unit, the modular reactor system is also configured to operate as a small-to-medium scale AO-process with a production capacity of hydrogen peroxide of up to 20 kilo tons per year, preferably with a production capacity of hydrogen peroxide of up to 15 kilo tons per year, and more preferably with a production capacity of hydrogen peroxide of up to 10 kilo tons per year. Any of the herein given minimum and/or maximum values for the production capacity or any of the before given ranges for the production capacity are applicable and combinable with this variant of the invention without a (permanent) reversion (regeneration) unit.

In particular, the reactor system is configured to operate without a (permanent) reversion (regeneration) unit for continuous or permanent reversion of the working solution. The only intermittently or periodically replacing and/or treating for regeneration or for reactivation of the working solution and/or the catalyst needs to be performed only with a low frequency, e.g. only after periods of a certain duration, e.g. of some weeks or months., Preferably, the working solution and/or the catalyst are replaced and/or treated for regeneration or reactivation only intermittently or periodically with a low frequency of only about monthly periods, preferably only after periods of at least 3 months in the loop of the AO-process. The reactor system is preferably almost completely closed, e.g. meaning that only minimum needed in- and/or outlets are forseen for perfoming the AO-loop process of hydrogenation, oxidation and the extraction of the aqueous hydrogen peroxide product.

The modular plant according to the invention is very suitable for performing a mini-AO-process for the manufacture of hydrogen peroxide which is automated to such an extent that it can be operated such that very little attention and support is required, in particular with regard to the reversion of the working solution and/or the regeneration of the hydrogenation catalyst. The modular plant according to the invention allows for a mini-AO-process for the manufacture of hydrogen peroxide to be operated such that the working solution and/or the catalyst are only intermittently or periodically with a low frequency, as described above, replaced or treated for regeneration or reactivation. This aspect of the invention is referred to as "intermittent", "periodical" or "low frequency" reversion and/or regeneration. Thus, in contrast to the conventional plants for the industrial manufacture of hydrogen peroxide which comprise a permanent reversion unit for continuous reversion of the working solution during the AO-process, the modular plant according to the present invention is preferably simplified without the need to include such a permanent reversion unit. Therefore, when performing the AO-process in a modular plant according to the present invention the working solution is reversed and/or the catalyst is regenerated only intermittently or periodically with low frequency, e.g. at a point in time when the production of a predefined quantity of hydrogen peroxide is reached, when the production efficiency drops below a predefined threshold value of a minimum required production efficiency, and/or when a the quantity of by-products exceeds a certain predefined quantity. Thus, when using a modular plant according to the present invention for the manufacture of hydrogen peroxide, particularly of aqueous hydrogen peroxide solutions, the working solution is normally replaced, by a fresh working solution or by a refreshed working solution, e.g. a working solution withdrawn from the reactor system and treated for reversion before refilling the reactor with said refreshed working solution, only intermittently when the before mentioned event occurs.

The working solution is then regenerated in separate equipment for the reversion of the working compounds contained in the working solution. This reversion of the working solution may be performed, for instance, at a different site in the equipment of another hydrogen peroxide production plant, e.g. in the respective regeneration equipment of a similar or preferably a larger scale hydrogen peroxide production plant. Alternatively, the working solution may be regenerated in separate mobile regeneration equipment for the reversion of the working compounds contained in the working solution, e.g. in a mobile regeneration unit that is used on demand or as appropriate in a number of different locations where a small to medium hydrogen peroxide manufacturing process according to the AO-process is performed. Another option is to intermittently or periodically perform the regeneration of the working solution under particular conditions in the main equipment of the small-to-medium hydrogen peroxide manufacturing process according to the AO-process itself.

Normally, within the modular plant of the invention the mini-AO-process for the manufacture of hydrogen peroxide can be performed such that the working solution and/or the catalyst are only periodically replaced for regeneration or reactivation, e.g. usually the AO-process may be operated within the modular plant of the invention for periods of several weeks, preferably months without replacement of the working solution for regeneration (reversion) or reactivation of the catalyst. The periodical replacement of the working solution and of the catalyst are independent from each other, but both may reasonably also be replaced at the same time or at different times or after the same or different periods of operation. Preferably, the reversion is only intermittently performed after a continuous operation period of the modular reactor system (modular plant) of at least 3 months, e.g. the working solution is normally replaced, by a fresh working solution or by a refreshed working solution, e.g. a working solution withdrawn from the modular reactor system and treated for reversion before refilling the modular reactor system with said refreshed working solution, only after periods of at least 3 months operation in the loop of the AO-process.

For example, a variant of the present invention is directed to a modular plant wherein the hydrogenation skid 1, oxidation skid 2 and extraction skid 5 together with any optional skid are designed as a modular reactor system, preferably as a compact modular reactor system, which modular plant is configured to operate without a reversion (regeneration) unit, preferably configured to operate without a permanent reversion (regeneration) unit, wherein the working solution and/or the catalyst are replaced and/or treated for regeneration or reactivation only intermittently or periodically after periods of at least 3 months in the loop of the AO-process steps of
(a) hydrogenation of a working solution in the hydrogenation skid 1 (hydrogenator) in the presence of a catalyst, wherein said working solution contains at least one alkylanthraquinone dissolved in at least one organic solvent, to obtain at least one corresponding alkylanthrahydroquinone compound; and
(b) oxidation of said at least one alkylanthrahydroquinone compound in the oxidizer skid 2 (oxidizer) to obtain hydrogen peroxide ; and (c) extracting the hydrogen peroxide formed in the oxidation skid 2 in an extraction skid 5.

In particular, this embodiment of a modular plant is configured to operate without a reversion (regeneration) unit, preferably configured to operate without a permanent reversion (regeneration) unit, as a small-to-medium scale AO-process with a production capacity of hydrogen peroxide of up to 20 kilo tons per year, preferably with a production capacity of hydrogen peroxide of up to 15 kilo tons per year, and more preferably with a production capacity of hydrogen peroxide of up to 10 kilo tons per year; and in very preferred embodiments any of the above given maximum values for the production capacity or any of the above given ranges for the production capacity are applicable and combinable with this variant of the invention without a (permanent) reversion (regeneration) unit.

Depending on the type of working solution and/or catalyst, and the particular design and capacity of the modular mini-AO-plant, the mini-AO-process may be so robust that it may be operated within the modular plant of the invention even for periods of individually at least 4, 5, 6, 7, 8, 9, 10, 11 or 12 months without replacement of the working solution for regeneration (reversion) or reactivation of the catalyst. According to this variant of the invention, the working solution and/or the catalyst (contained therein for the purpose of producing hydrogen peroxide by the AO-process) are replaced and/or treated for regeneration or reactivation only periodically after periods of at least 6 month, preferably at least 9 months, and more preferred at least 12 months.

For example, usually, in practice the continuous working period may be individually from 3-4 months, 3-5 months, 3-6 months, 3-7 months, 3-8 months, 3-9 months, 3-10 months, 3-11 months, 3-12 months ; 4-5 months, 4-6 months, 4-7 months, 4-8 months, 4-9 months, 4-10 months, 4-11 months, 4-12 months ; 5-6 months, 5-7 months, 5-8 months, 5-9 months, 5-10 months, 5-11 months, 5-12 months ; 6-7 months, 6-8 months, 6-9 months, 6-10 months, 6-11 months, 6-12 months ; 7-8 months, 7-9 months, 7-10 months, 7-11 months, 7-12 months ; 8-9 months, 8-10 months, 8-11 months, 8-12 months ; 9-10 months, 9-11 months, 9-12 months; 10-11 months, 10-12 months or 11-12 months.

According to a further aspect of the invention, an industrial technically, operationally and economically very suitable and flexible, optionally also remotely controllable, modular plant design is described related to a small-to-medium scale hydrogen peroxide production capacity, in which modular plant a "mini-AO-process" may be operated with a maximum production capacity of up to 20 ktpy. Preferably the modular plant design is sized to a mini-AO-process with an even lower maximum production capacity of up to 15 ktpy (kilo tons per year). Usually, the modular plant design according to the invention is sized to operate a mini-AO-process plant with a capacity in the range of 2 to 15 ktpy. Any of the before given minimum and/or maximum values for the production capacity or any of the before given ranges for the production capacity are applicable and combinable with the variant of the invention without a (permanent) reversion (regeneration) unit.

In a preferred embodiment the present invention is therefore directed to a modular plant for production of hydrogen peroxide, particularly of aqueous hydrogen peroxide solutions, by the autoxidation process (AO-process) wherein the hydrogenation skid 1, oxidation skid 2 and extraction skid 5 together with any optional skid are designed as a modular reactor system, preferably as a compact modular reactor system, which is configured to operate as a small-to-medium scale AO-process plant with a production capacity of hydrogen peroxide in the range of 2 to 15 ktpy, preferably in the range of 2 to 10 ktpy.

In a more preferred variant of this embodiment of the invention the modular plant for production of hydrogen peroxide, preferably of aqueous hydrogen peroxide solutions, by the autoxidation process (AO-process) is characterized in that the hydrogenation skid 1, oxidation skid 2 and extraction skid 5 together with any optional skid are designed as a modular reactor system, preferably as a compact modular reactor system, which is configured to operate as a small-to-medium scale AO-process plant with a production capacity of hydrogen peroxide in any range selected from 2-3 ktpy, 3-5 ktpy, 5-7.5 ktpy, 7.5-10 ktpy, 10-12.5 ktpy, or 12.5-15 ktpy, preferably in any range selected from 2-3 ktpy, 3-5 ktpy, 5-7.5 ktpy or 7.5-10 ktpy, where ktpy stands for kilo tons per year.

For example, the modular plant for production of (aqueous) hydrogen peroxide (solutions) by the autoxidation process (AO-process) may be designed such that the hydrogenation skid 1, oxidation skid 2 and extraction skid 5 together with any optional skid as, in particular a compact modular reactor system, can be configured to operate as a small to medium scale AO-process with a production capacity in a flexible manner for a variety of any other ranges within said capacity scope, e.g. to provide a capacity which best fits to the local needs where the process is operated. Thus, as an example and without limitation, possible capacity ranges are from 2-5 ktpy, 2-6 ktpy, 2-7 ktpy, 2-8 ktpy, 2-9 ktpy, 2-10 ktpy, 2-11 ktpy, 2-12 ktpy, 2-13 ktpy, 2-14 ktpy, 2-15 ktpy ; 3-6 ktpy, 3-7 ktpy, 3-8 ktpy, 3-9 ktpy, 3-10 ktpy, 3-11 ktpy, 3-12 ktpy, 3-13 ktpy, 3-14 ktpy, 3-15 ktpy ; 4-6 ktpy, 4-7 ktpy, 4-8 ktpy, 4-9 ktpy, 4-10 ktpy, 4-11 ktpy, 4-12 ktpy, 4-13 ktpy, 4-14 ktpy, 4-15 ktpy ; 5-6 ktpy, 5-7 ktpy, 5-8 ktpy, 5-9 ktpy, 5-10 ktpy, 5-11 ktpy, 5-12 ktpy, 5-13 ktpy, 5-14 ktpy, 5-15 ktpy ; 6-7 ktpy, 6-8 ktpy, 6-9 ktpy, 6-10 ktpy, 6-11 ktpy, 6-12 ktpy, 6-13 ktpy, 6-14 ktpy, 6-15 ktpy ; 7-8 ktpy, 7-9 ktpy, 7-10 ktpy, 7-11 ktpy, 7-12 ktpy, 7-13 ktpy, 7-14 ktpy, 7-15 ktpy ; 8-9 ktpy, 8-10 ktpy, 8-11 ktpy, 8-12 ktpy, 8-13 ktpy, 8-14 ktpy, 8-15 ktpy ; 9-10 ktpy, 9-11 ktpy, 9-12 ktpy, 9-13 ktpy, 9-14 ktpy, 9-15 ktpy ; 10-11 ktpy, 10-12 ktpy, 10-13 ktpy, 10-14 ktpy, 10-15 ktpy ; 11-12 ktpy, 11-13 ktpy, 11-14 ktpy, 11-15 ktpy ; 12-13 ktpy, 12-14 ktpy, 12-15 ktpy ; 13-14 ktpy, 13-15 ktpy ; 14-15 ktpy, where Ktpy stands for kilo tons per year.

In a preferred modular plant for production of hydrogen peroxide, particularly of aqueous hydrogen peroxide solutions, by the autoxidation process (AO-process) the modular plant according to the invention provides for a production capacity of hydrogen peroxide of 2,000 to 10,000 metric tons per year. Typically, the size of a plant for the manufacture of hydrogen peroxide depends on the production capacity. For example, within the preferred design range between 2 and 10 ktpy a plant of 3 ktpy capacity will be much smaller than a 10 ktpy plant. Therefore, in a more preferred embodiment of the invention, e.g. for economic reasons, the design of the mini-AO-process pertains to manufacture of hydrogen peroxide by the AO-process or to mini-AO-plants with narrower capacity ranges, as for instance, 2-3 ktpy, 3-5 ktpy, 5-7.5 ktpy or 7.5-10 ktpy. Similarly, also for higher capacities the more narrow capacity ranges are preferred, as for instance, 10-12.5 ktpy, 12.5-15 ktpy.

Any of the before given minimum and/or maximum values for the production capacity or any of the before given ranges for the production capacity are applicable and combinable with the variant of the invention without a (permanent) reversion (regeneration) unit.

In yet a further aspect the present invention provides an industrial technically, operationally and economically very suitable and flexible modular plant design for a remotely controllable, small-to-medium scale hydrogen peroxide production capacity, wherein it is feasible to remotely control the "mini-AO process" and to automate the "mini-AO process" to such an extent that it can be easily and safely operated by remote control, and such that very little local attention and support is required. This aspect of the invention will be referred to in the following as "remote control". This aspect of the invention is combinable with any other embodiment or variant of the present invention as described herein.

Accordingly, in this aspect the present invention relates to a modular plant design for production of hydrogen peroxide, particularly of aqueous hydrogen peroxide solutions, by the autoxidation process (AO-process) wherein one or more of said skids 1 to 6 are equipped with one or more sensors for monitoring one or more AO-process parameters at the hydrogen peroxide production plant, said sensors being interconnected with one or more first computers at the hydrogen peroxide production plant, said first computers being linked via a communication network to one or more second computers in a control room being remote from the hydrogen peroxide production plant, and wherein said control room is remotely controlling said hydrogen peroxide production plant.

The control board of the control room is preferably connected online to a remote control board which may be located on another facility. This allows operating several modular hydrogen peroxide production plants remotely from one single control room. Thus, the control room for remotely controlling the modular hydrogen peroxide production plant according to the present invention may be located at any other suitable site which is different and distant from said remotely controlled modular hydrogen peroxide production plant. Usually, this control room will be located or centralized where appropriate computer equipment can be installed and connected to a communication network, and where the remote control of the hydrogen peroxide production can be optimized and maintained in more practical and economical manner than at the modular production plant itself. At such a different hydrogen peroxide production site normally also staff is available which is optimally trained and experienced regarding the manufacture of hydrogen peroxide by the AO-process and capable to remotely control said distant hydrogen production site, and either to remotely intervene, for instance via the communication network or via phone call or e-mail and the like, or to organize appropriate local intervention at the remotely controlled modular hydrogen peroxide production plant in case of need, for instance by a local operator or by sending dedicated and experienced technical support staff or service technicians.

The remote control is in particular very suitable for controlling one or more modular hydrogen peroxide production plants according to the present invention with a small-to-medium hydrogen peroxide production scale from a distance. Therefore, in a variant of this remote control aspect the invention also pertains to a plant for production of hydrogen peroxide, particularly of aqueous hydrogen peroxide solutions, by the autoxidation process (AO-process) wherein the control room remotely controlling the modular hydrogen peroxide production plant is located at another hydrogen peroxide production site being different from said remotely controlled modular hydrogen peroxide production plant, preferably at another hydrogen peroxide production site with a larger scale of hydrogen peroxide production capacity than in said remotely controlled modular hydrogen peroxide plant, and more preferably with a scale of hydrogen peroxide production capacity of at least 30 kilo tons per year, more preferably of at least 40 kilo tons per year, at that larger scale hydrogen peroxide production site.

The sensors on the one or more skids or on other ancillary means are normally part of a monitoring system conventionally used in the art for monitoring the performance of a hydrogen peroxide manufacturing plant which runs under the AO-process. Therefore, the skids being equipped with one or more sensors for monitoring one or more AO-process parameters usually are those of the main AO-process such as the hydrogenation unit (hydrogenator), an oxidation unit (oxidizer), and an extraction unit (means to extract hydrogen peroxide), or any other obligatory or optional unit of the main AO-process. The skids being equipped with one or more sensors may also be any unit of any ancillary process unit as described herein. The equipment and/or means involved in the manufacture of hydrogen peroxide according to the AO-process, for example but without limitation, may be one or several equipment selected from pumping systems, valves, pipes, vessels, compressors, heating and cooling system, outlets, means for providing power and means for measuring the pressure, temperature, quantity, flow rate, density, viscosity, catalyst activity, acidity, purity, concentration, the hydrogen peroxide productivity or other process parameters relevant for the production of hydrogen peroxide according to the AO-process. There may be also means, as appropriate, for monitoring electric current, voltage and the like.

The one or more sensors for monitoring AO-process parameters may be of any suitable type, and are in particular those already commonly used in AO-processes for steering the complete hydrogen peroxide production cycle, or any individual or combined AO-process steps. In a variant of the invention, these sensors may be those as commonly used in large-to-mega scale hydrogen production plants or processes. Or in another variant, the sensors may be modified or specifically adapted to the small-to-medium scale hydrogen peroxide production plant or processes. In yet another variant of the modular plant designed for a mini-AO-process according to the invention, a suitable combination of those commonly used in used in large-to-mega scale hydrogen production and those modified or specifically adapted to the small-to-medium scale hydrogen peroxide production, may be involved.

The one or more sensors may be suited and employed for monitoring AO-process parameters, for example but without limitation, such as pressure, temperature, quantity, flow rate, density, viscosity, catalyst activity, acidity, purity, concentration, hydrogen peroxide productivity or other process parameters relevant for the production of hydrogen peroxide according to the AO-process. A sensor or a combination of sensors may be suited to directly monitor or measure a parameter relevant for the production of hydrogen peroxide according to the AO-process, or the sensor or a combination of sensors may indirectly monitor or measure other data or a variety of other data, and then the parameter relevant for steering the production of hydrogen peroxide according to the AO-process is calculated from said monitored or measured data. Furthermore, a camera or a variety of cameras or other optical equipment to measure optical effects may be used in addition to monitor, measure and/or survey the AO-process, its equipment and means, or parameters, respectively.

Accordingly, in this aspect of the invention, the modular plant for production of hydrogen peroxide, particularly of aqueous hydrogen peroxide solutions, by the autoxidation process (AO-process) is designed such that one or more of said skids 1 to 6 are equipped with one or more sensors for monitoring one or more AO-process parameters such as pressure, temperature, quantity, flow rate, density, viscosity, catalyst activity, acidity, purity, concentration, hydrogen peroxide productivity or other process parameters relevant for the production of hydrogen peroxide according to the AO-process.

According to a further aspect of the invention, the modular plant for production of hydrogen peroxide, particularly of aqueous hydrogen peroxide solutions, by the autoxidation process (AO-process) is designed such that one or more of said skids 1 to 6 are equipped with a safety equipment or safety means to allow for automatic safe shutdown, preferably a safety PLC (independent protection layer) or hardwired relay based system for the monitoring and automatic safe shutdown (interlock system).

Another aspect of the present invention is to provide a modular plant for production of hydrogen peroxide, particularly of aqueous hydrogen peroxide solutions, by the autoxidation process (AO-process), optionally for a remotely controlled, AO-process for the production of hydrogen peroxide, which modular plant is technically, operationally and economically feasible and designed to operate as a small-to-medium scale hydrogen peroxide production plant preferably on-site of a hydrogen peroxide using customer ("host" site). The modular plant for the manufacture of hydrogen peroxide by the AO-process according to the invention, optionally under remote control, particularly allows for installing and operating a hydrogen peroxide production plant which is located proximal to or on-site of an end user site or customer site utilizing the hydrogen peroxide an industrial application. Preferably, this end user or customer site is a site with an industrial application of hydrogen peroxide selected from pulp and paper industry or the textile industry, or the mining industry or sites with environmental applications.

Consequently, the invention also pertains to a plant for production of hydrogen peroxide, particularly of aqueous hydrogen peroxide solutions, by the autoxidation process (AO-process) wherein the modular hydrogen peroxide production plant is located proximal to or on-site of an end user site or a customer site utilizing the hydrogen peroxide in an industrial application, preferably proximal to or on-site of an end user or customer site with an industrial application of hydrogen peroxide selected from pulp and paper industry or the textile industry, or the mining industry or sites with environmental applications.

Furthermore, generally no distillation of hydrogen peroxide is required, e.g. the modular AO-process plant for the manufacture of hydrogen peroxide, particularly of aqueous hydrogen peroxide solutions, doe not comprise a distillation unit and the crude low concentration hydrogen peroxide is ready to be utilized in the customers' application. This is an advantage of the production of hydrogen peroxide on-site of a hydrogen peroxide consuming end user (customer), because the modular AO-process plant can avoid the distillation which is usually performed in the large-scale plants for converting the hydrogen peroxide into a more suitable concentrated form for transportation reasons. For example, the hydrogen peroxide concentration in conventional large-scale process is usually 40 %, distilled to and transported with a concentration from 50 to 70 %. Contrary, the target for the manufacture of hydrogen peroxide in the modular AO-process according to the invention is a concentration of 10 - 15 % hydrogen peroxide.

Normally, the modular plant according to the invention for the manufacture of hydrogen peroxide by the AO-process, optionally under remote control, is particularly suited for being operated in a way such that from the extraction unit at least a portion of an aqueous solution of hydrogen peroxide is delivered to a site of use that is proximal to the modular hydrogen peroxide production plant, preferably proximal to the extraction skid of said modular hydrogen peroxide production plant. Ideally, in this variant of the modular hydrogen peroxide production plant according to the invention the aqueous hydrogen peroxide solution is delivered as an aqueous hydrogen peroxide solution containing a predetermined concentration of hydrogen peroxide which is suitable for being directly utilized in the specified industrial application of the site of use.

Thus, the modular hydrogen peroxide production plant according to the invention for the manufacture of hydrogen peroxide by the AO-process may deliver a crude hydrogen peroxide solution in a concentration ready for use in an industrial application is provided. The resulting crude hydrogen peroxide solution is readily suitable for its use at the host site, e.g. as bleaching agent in the pulp and paper industry or the textile industry host site, or in a site with mining and environmental applications. Thus, the hydrogen peroxide concentration in the aqueous solutions resulting from the extraction step according the invention can be specifically adjusted to the end user needs at the host (satellite) site, and the concentration may be in the range of up to 15 percent, preferably in the range of 2-15 percent, more preferably 5-15 percent, and most preferred in the range of 10-15 percent. Other suitable ranges of the crude hydrogen peroxide solution resulting from the mini-AO-process according to the invention may be from 2-5 percent, 2-6 percent, 2-7 percent, 2-8 percent, 2-9 percent, 2-10 percent, 2-11 percent, 2-12 percent, 2-13 percent, 2-14 percent, 2-15 percent; 3-6 percent, 3-7 percent, 3-8 percent, 3-9 percent, 3-10 percent, 3-11 percent, 3-12 percent, 3-13 percent, 3-14 percent, 3-15 percent; 4-6 percent, 4-7 percent, 4-8 percent, 4-9 percent, 4-10 percent, 4-11 percent, 4-12 percent, 4-13 percent, 4-14 percent, 4-15 percent; 5-6 percent, 5-7 percent, 5-8 percent, 5-9 percent, 5-10 percent, 5-11 percent, 5-12 percent, 5-13 percent, 5-14 percent, 5-15 percent; 6-7 percent, 6-8 percent, 6-9 percent, 6-10 percent, 6-11 percent, 6-12 percent, 6-13 percent, 6-14 percent, 6-15 percent; 7-8 percent, 7-9 percent, 7-10 percent, 7-11 percent, 7-12 percent, 7-13 percent, 7-14 percent, 7-15 percent; 8-9 percent, 8-10 percent, 8-11 percent, 8-12 percent, 8-13 percent, 8-14 percent, 8-15 percent; 9-10 percent, 9-11 percent, 9-12 percent, 9-13 percent, 9-14 percent, 9-15 percent; 10-11 percent, 10-12 percent, 10-13 percent, 10-14 percent, 10-15 percent; 11-12 percent, 11-13 percent, 11-14 percent, 11-15 percent; 12-13 percent, 12-14 percent, 12-15 percent; 13-14 percent, 13-15 percent, or 14-15 percent.

The modular AO-process plant, in particular the mini-AO-process plant, of the present invention can be operated as a decentralized satellite plant of a central mother plant for the production of hydrogen peroxide, whereby this satellite plant may be located at any, even remote industrial or end user site with the only precondition that at this facility or satellite site hydrogen and other common utilities are readily available for the mini-AO-process. Thus, the mini-AO-process plant can be operated in a decentralized manner as a satellite plant distant, even far distant from a central large-scale mother plant. Therefore, at the satellite plant no facilities or means are required to continuously and simultaneously regenerate (reverse) the working solution and/or to reactivate the hydrogenation catalyst during the AO-process. At the time, e.g. after the above mentioned periods of continuous operation of the mini-AO-process the working solution and/or the catalyst are withdrawn from the satellite plant and replaced by a fresh or reversed working solution, or the catalyst is replaced by a fresh or reactivated catalyst, respectively. The working solution and/or the catalyst withdrawn from the satellite plant then is transported to the central mother plant for the purpose of regeneration (reversion) or reactivation, respectively.

Next to the "essential" equipment of the modular AO-process plant according to the invention as described above, the modular plant may also comprise a number of typical "ancillary" equipment. (e.g. working solution acidity control; hydrogen facility available at remote / satellite site). However, according to the concept of a simplified modular, preferably decentralized and/or remote satellite AO-process plant located at an end user site, the number of ancillary equipment is kept as few as possible and usually is limited to the minimum need for continuously operating the AO-process in the modular and/or satellite plant as simple as possible but also as robust and stable over periods as indicated above without too many physical or technical interventions at the modular and/or satellite plant during said periods.

Such a plant according to the present invention comprising parts assembled in several skids has many advantages. For example, the skids can be preassembled and tested in a factory; thus, they are a kind of "off-shelf' product, and need only be mounted on-site. This saves time. It is also much easier to dismount specific skids for maintenance, repair of or substitution by skids comprising parts with the same function but improved performance, or with lower or higher output. There are also improvements in safety: for example, as explained above, no hazarduous distillation of hydrogen peroxide and no transportation of highly concentrated hydrogen peroxide solutions are required. The capacity of the plant can be expanded by adding modules. Preferably, the skids have sea container size thus allowing for the easy transport of modules.

Often, the skid structure is a painted steel frame on which all equipments are fixed; they are designed for outdoor installation. Panels, doors and roofs, if fixed on the external structure of the skid, imply that the external skid dimensions exceed the standard sea container dimensions. If necessary, such skids are prefabricated and panels, doors and the roof, respectively, are assembled to the skids on site. The skids may be anchored on an existing concrete slab or by or on specific foundations.

The advantage of skids is, for example, that they are manufactured, piped, wired and assembled together before shop testing. It is preferred if they are constructed such that the interfaces between the skids are minimized and that all parts in the respective skid are accessible as easily as possible for maintenance, inspection or repair.

A further advantage of the skids is the safety aspect, a reliable hydrogen peroxide production for 24 h and 7 days a week of crude purity hydrogen peroxide solution ready for use.

As a particular advantage the present invention provides a modular plant for carrying out an AO-process for the manufacture of hydrogen peroxide, particularly a mini-AO-process, as described above, which plant can be automated to such an extent that it can be operated by remote control in a way that requires very little local attention and support at the hydrogen peroxide site, and therefore is suitable as a hydrogen peroxide plant located proximal to or on a customer site or any other "host" site.

The modular mini-AO-plant according to the present invention has the advantage that it is compact, since a couple of equipment and process steps which are performed in conventional AO-processes have been eliminated or are now performed in simpler equipment, or are now performed in a more economically and technically feasible manner remotely in a distant large to mega-scale mother plant which provides optimized facilities and skilled staff, and from where optionally also the process parameters can be remotely controlled. It is noted that the mini-AO-plant according to the present invention most preferably does not comprise a unit for (permanent) reversion (regeneration) of the working solution or a unit the reactivation of the reactivation catalyst. In a preferred embodiment of the invention, therefore, said distant large to mega-scale mother plant shall provide central reversion unit and process for the periodical regeneration of the working solution and/or facilities for the periodical reactivation of the hydrogenation catalyst of the satellite mini-AO plant.

The described modular AO-process plant according to the present invention has the advantage that it can deal adequately with specific needs of an end user with regard to the use of hydrogen peroxide solutions, e.g. the required amounts at given times of production, the concentration and quality thereof, in its own industrial processes, while at the same time the modular AO-process plant according to the invention by focus on the essential requirements at the end user site, requires fewer pieces of equipment, less management attention, and less maintenance when compared with conventional large-scale hydrogen peroxide production plants. Thus, with the present invention, an efficient modular hydrogen peroxide AO-process plant is provided which is economically feasible, even at small-to-medium scale industrial hydrogen peroxide manufacturing capacity. Therefore, the present invention constitutes a considerable improvement over the known processes to produce hydrogen peroxide, and in particular aqueous hydrogen peroxide solutions readily suitable for the end users' industrial application.

While the invention has been described with reference to details of the illustrated embodiment, these details are not intended to limit the scope of the invention as defined in the appended claims.

## Claims

1. A plant for production of hydrogen peroxide, perfereably of aqueous hydrogen peroxide solutions, by the autoxidation process, the process comprising hydrogenating an anthraquinone in a working solution, oxidizing the hydrogenated anthraquinone with oxygen to form hydrogen peroxide and extracting the hydrogen peroxide from the working solution, the plant comprising at least one skid mounted module selected from the group consisting of:
- a skid mounted module comprising at least one hydrogenator to hydrogenate the anthraquinone in the working solution, denoted as skid 1;
- a skid mounted module comprising at least one oxidizer to oxidize the hydrogenated anthraquinone with oxygen to form hydrogen peroxide, denoted as skid 2;
- optionally a skid mounted module comprising at least one means to compress air, denoted as skid 3, to feed oxygen, in particular oxygen from the air, into an oxidizer of skid 2, and in case of presence of skid 3 a further skid mounted module comprising at least one means to recover the solvent, denoted as skid 4, in particular if oxygen from the air is used to feed oxygen into an oxidizer of skid 2;
- a skid mounted module comprising at least one means to extract the hydrogen peroxide from the working solution, denoted as skid 5;
- a skid mounted module, denoted as skid 6, comprising at least one means to deliver hydrogen peroxide solution to the point of use and/or optionally to a storage tank optionally with additional means for adjusting the hydrogen peroxide concentration.

2. A plant for production of hydrogen peroxide, perfereably of aqueous hydrogen peroxide solutions, by the autoxidation process according to claim 1, wherein the hydrogenation skid 1 comprises at least one or more equipment items selected from the group of Hydrogenator, Hydrogen Recycle Compressor, Catalyst Filter, Oxidizer Feed Tank, Oxidizer Feed Pump and Guard Catalyst Bed.

3. A plant for production of hydrogen peroxide, perfereably of aqueous hydrogen peroxide solutions, by the autoxidation process according to claim 1, wherein the oxidizer skid 2 comprises at least one or more equipment items selected from the group of Oxidiser Feed Cooler, Oxidiser, Degasser, Extraction Feed Pump, Off-Gas Condenser and Off-Gas Demister.

4. A plant for production of hydrogen peroxide, perfereably of aqueous hydrogen peroxide solutions, by the autoxidation process according to claim 1, wherein the extraction skid 5 comprises at least one or more equipment items selected from the group of Cooler, Coalescer and Hydrogenator Feed Pump, and optionally an Extraction Column and/or being connectable to an Extraction Column.

5. A plant for production of hydrogen peroxide, perfereably of aqueous hydrogen peroxide solutions, by the autoxidation process according to claim 1, wherein the optional process air compressor skid 3 comprises at least one or more equipment items selected from the group of Process Air Compressor Package, Suction Air Filter and After Cooler-Condenser.

6. A plant for production of hydrogen peroxide, perfereably of aqueous hydrogen peroxide solutions, by the autoxidation process according to claim 1, wherein the optional solvent recovery unit skid 4 comprises at least one or more equipment items selected from the group of Activated Carbon Adsorbtion Package, Regeneration Condenser, Solvent/Water Decanter, Solvent Return Pump and Water Return Pump.

7. A plant for production of hydrogen peroxide, perfereably of aqueous hydrogen peroxide solutions, by the autoxidation process according to any of the claims 1 to 6, comprising an oxygen from the air supply unit used to feed oxygen into an oxidizer of skid 2 and further comprising at least one skid mounted module selected from the group consisting of
- a skid mounted module comprising at least one hydrogenator to hydrogenate the anthraquinone in the working solution, denoted as skid 1 ;
- a skid mounted module comprising at least one oxidizer to oxidize the hydrogenated anthraquinone with oxygen to form hydrogen peroxide, denoted as skid 2 ;
- a skid mounted module comprising at least one means to compress air, denoted as skid 3, to feed oxygen, in particular oxygen from the air, into an oxidizer of skid 2, and comprising a further skid mounted module comprising at least one means to recover the solvent, denoted as skid 4 ;
- a skid mounted module comprising at least one means to extract the hydrogen peroxide from the working solution, denoted as skid 5 ;
- a skid mounted module, denoted as skid 6, comprising at least one means to deliver hydrogen peroxide solution to the point of use and/or optionally to a storage tank optionally with additional means for adjusting the hydrogen peroxide concentration.

8. A plant for production of hydrogen peroxide, preferably of aqueous hydrogen peroxide solutions, by the autoxidation process according to any of the claims 1 to 7, **characterized in that** the hydrogenation skid 1, oxidation skid 2 and extraction skid 5 together with any optional skid are designed as a modular reactor system, preferably as a compact modular reactor system, which is configured to operate as a small-to-medium scale AO-process plant with a production capacity of hydrogen peroxide of up to 20 kilo tons per year, preferably with a production capacity of hydrogen peroxide of up to 15 kilo tons per year, and more preferably with a production capacity of hydrogen peroxide of up to 10 kilo tons per year.

9. A plant for production of hydrogen peroxide, preferably of aqueous hydrogen peroxide solutions, by the autoxidation process according to any of the claims 1 to 8, **characterized in that** one or more of said skids 1 to 6 are equipped with one or more sensors for monitoring one or more AO-process parameters such as pressure, temperature, quantity, flow rate, density, viscosity, catalyst activity, acidity, purity, concentration, hydrogen peroxide productivity or other process parameters relevant for the production of hydrogen peroxide according to the AO-process.

10. A plant for production of hydrogen peroxide, perfereably of aqueous hydrogen peroxide solutions, by the autoxidation process according to any of the claims 1 to 9, **characterized in that** one or more of said skids 1 to 6 are equipped with a safety equipment or safety means to allow for automatic safe shutdown, preferably a safety PLC or independent protection layer, or hardwired relay based system for the monitoring and automatic safe shutdown or interlock system.

## Patentansprüche

1. Anlage zur Herstellung von Wasserstoffperoxid, vorzugsweise von wässrigen Wasserstoffperoxidlösungen durch das Autooxidationsverfahren, wobei das Verfahren das Hydrieren eines Anthrachinons in einer Arbeitslösung, das Oxidieren des hydrierten Anthrachinons mit Sauerstoff zum Bilden von Wasserstoffperoxid und das Extrahieren des Wasserstoffperoxids aus der Arbeitslösung umfasst, wobei die Anlage mindestens ein rahmenmontiertes Modul umfasst, das ausgewählt ist aus der Gruppe, bestehend aus:
- einem rahmenmontierten Modul, umfassend mindestens einen Hydrierreaktor zum Hydrieren des Anthrachinons in der Arbeitslösung, das als Rahmen 1 bezeichnet wird;
- einem rahmenmontierten Modul, umfassend mindestens einen Oxidierer zum Oxidieren des hydrierten Anthrachinons mit Sauerstoff zum Bilden von Wasserstoffperoxid, das als Rahmen 2 bezeichnet wird;
- optional einem rahmenmontierten Modul, umfassend mindestens ein Mittel zum Komprimieren von Luft, das als Rahmen 3 bezeichnet wird, zum Einleiten von Sauerstoff, insbesondere Sauerstoff aus der Luft, in einen Oxidierer von Rahmen 2 und im Falle des Vorhandenseins eines Rahmens 3, ein weiteres rahmenmontiertes Modul, umfassend mindestens ein Mittel zum Wiedergewinnen des Lösungsmittels, das als Rahmen 4 bezeichnet wird, insbesondere, wenn Sauerstoff aus der Luft zum Einleiten von Sauerstoff in den Oxidierer von Rahmen 2 verwendet wird;
- einem rahmenmontierten Modul, umfassend mindestens ein Mittel zum Extrahieren des Wasserstoffperoxids aus der Arbeitslösung, das als Rahmen 5 bezeichnet wird;
- einem rahmenmontierten Modul, das als Rahmen 6 bezeichnet wird, umfassend mindestens ein Mittel zum Zuführen der Wasserstoffperoxidlösung zum Ort der Verwendung und/oder optional zu einem Speichertank, optional mit zusätzlichen Mitteln zum Einstellen der Wasserstoffperoxidkonzentration.

2. Anlage zur Herstellung von Wasserstoffperoxid, vorzugsweise von wässrigen Wasserstoffperoxidlösungen, durch das Autooxidationsverfahren nach Anspruch 1, wobei der Hydrierrahmen 1 mindestens eines oder mehrere Geräteelemente umfasst, die ausgewählt sind aus der Gruppe, bestehend aus:
Hydrierreaktor, Wasserstoffrückführungsverdichter, Katalysatorfilter, Oxidationsmittel-Zuführbehälter, Oxidationsmittel-Förderpumpe und Katalysatorschutzbett.

3. Anlage zur Herstellung von Wasserstoffperoxid, vorzugsweise von wässrigen Wasserstoffperoxidlösungen, durch das Autooxidationsverfahren nach Anspruch 1, wobei der Oxidierrahmen 2 mindestens eines oder mehrere Geräteelemente umfasst, die ausgewählt sind aus der Gruppe, bestehend aus:
Oxidationsmittel-Zufuhrkühler, Oxidierer, Entgaser, Extrahierförderpumpe, Abgas-Kondensator und Abgasentfeuchter.

4. Anlage zur Herstellung von Wasserstoffperoxid, vorzugsweise von wässrigen Wasserstoffperoxidlösungen, durch das Autooxidationsverfahren nach Anspruch 1, wobei der Extrahierrahmen 5 mindestens eines oder mehrere Geräteelemente umfasst, die ausgewählt sind aus der Gruppe, bestehend aus:
Kühlvorrichtung, Koaleszer- und Hydrierreaktor-Förderpumpe und optional einer Extraktionssäule und/oder an eine Extraktionssäule anschließbar.

5. Anlage zur Herstellung von Wasserstoffperoxid, vorzugsweise von wässrigen Wasserstoffperoxidlösungen, durch das Autooxidationsverfahren nach Anspruch 1, wobei der optionale Prozessluft-Verdichterrahmen 3 mindestens eines oder mehrere Geräteelemente umfasst, die ausgewählt sind aus der Gruppe, bestehend aus: Prozessluftverdichterpackung, Ansaugluftfilter und Nachkühlungskondensator.

6. Anlage zur Herstellung von Wasserstoffperoxid, vorzugsweise von wässrigen Wasserstoffperoxidlösungen, durch das Autooxidationsverfahren nach Anspruch 1, wobei der optionale Lösungsmittel-Wiederherstellungsrahmen 4 mindestens eines oder mehrere Geräteelemente umfasst, die ausgewählt sind aus der Gruppe, bestehend aus: Aktivkohle-Adsorptionspackung, Regenerierkondensator, Lösungsmittel-/Wasserdekanter, Lösungsmittelrückführpumpe und Wasserrückführpumpe.

7. Anlage zur Herstellung von Wasserstoffperoxid, vorzugsweise von wässrigen Wasserstoffperoxidlösungen, durch das Autooxidationsverfahren nach einem der Ansprüche 1 bis 6, umfassend Sauerstoff aus der Luftzuführeinheit, der zum Einleiten von Sauerstoff in einen Oxidierer von Rahmen 2 verwendet wird, und ferner umfassend mindestens ein rahmenmontiertes Modul, das ausgewählt ist aus der Gruppe, bestehend aus:
- einem rahmenmontierten Modul, umfassend mindestens einen Hydrierreaktor zum Hydrieren des Anthrachinons in der Arbeitslösung, das als Rahmen 1 bezeichnet wird;
- einem rahmenmontierten Modul, umfassend mindestens einen Oxidierer zum Oxidieren des hydrierten Anthrachinons mit Sauerstoff zum Bilden von Wasserstoffperoxid, das als Rahmen 2 bezeichnet wird;
- einem rahmenmontierten Modul, umfassend mindestens ein Mittel zum Komprimieren von Luft, das als Rahmen 3 bezeichnet wird, zum Einleiten von Sauerstoff, insbesondere Sauerstoff aus der Luft, in einen Oxidierer von Rahmen 2 und ferner umfassend ein weiteres rahmenmontiertes Modul, umfassend mindestens ein Mittel zum Wiedergewinnen des Lösungsmittels, das als Rahmen 4 bezeichnet wird;
- einem rahmenmontierten Modul, umfassend mindestens ein Mittel zum Extrahieren des Wasserstoffperoxids aus der Arbeitslösung, das als Rahmen 5 bezeichnet wird;
- einem rahmenmontierten Modul, das als Rahmen 6 bezeichnet wird, umfassend mindestens ein Mittel zum Zuführen der Wasserstoffperoxidlösung zum Ort der Verwendung und/oder optional zu einem Speichertank, optional mit zusätzlichen Mitteln zum Einstellen der Wasserstoffperoxidkonzentration.

8. Anlage zur Herstellung von Wasserstoffperoxid, vorzugsweise von wässrigen Wasserstoffperoxidlösungen, durch das Autooxidationsverfahren nach einem der Ansprüche 1 bis 7, **dadurch gekennzeichnet, dass** der Hydrierrahmen 1, der Oxidierrahmen 2 und der Extrahierrahmen 5 zusammen mit jedem optionalen Rahmen als modulares Reaktorsystem ausgestaltet sind, vorzugsweise als kompaktes modulares Reaktorsystem, das zum Betreiben als eine AO-Verarbeitungsanlage kleiner bis mittlerer Ordnung mit einer Produktionskapazität von Wasserstoffperoxid von bis zu 20 Kilotonnen pro Jahr konfiguriert ist, vorzugsweise mit einer Produktionskapazität von Wasserstoffperoxid von bis zu 15 Kilotonnen pro Jahr und mehr bevorzugt mit einer Produktionskapazität von Wasserstoffperoxid von bis zu 10 Kilotonnen pro Jahr.

9. Anlage zur Herstellung von Wasserstoffperoxid, vorzugsweise von wässrigen Wasserstoffperoxidlösungen, durch das Autoxidationsverfahren nach einem der Ansprüche 1 bis 8, **dadurch gekennzeichnet, dass** einer oder mehrere der Rahmen 1 bis 6 mit einem oder mehreren Sensoren zum Überwachen eines oder mehrerer AO-Prozessparameter wie Druck, Temperatur, Menge, Flussrate, Dichte, Viskosität, Katalysatoraktivität, Säure, Reinheit, Konzentration, Wasserstoffperoxidproduktivität oder anderer Prozessparameter, die zur Herstellung von Wasserstoffperoxid gemäß dem AO-Prozess relevant sind, ausgestattet sind.

10. Anlage zur Herstellung von Wasserstoffperoxid, vorzugsweise von wässrigen Wasserstoffperoxidlösungen, durch das Autooxidationsverfahren nach einem der Ansprüche 1 bis 9, **dadurch gekennzeichnet, dass** einer oder mehrere der Rahmen 1 bis 6 mit einem Sicherheitsgerät oder Sicherheitsmitteln ausgestattet sind, um die automatische Schutzabschaltung zu ermöglichen, vorzugsweise mit einer Sicherheits-PLC oder unabhängigen Schutzschicht oder einem hartverdrahteten relaisbasierten System zur Überwachung und automatischen Schutzabschaltung oder mit einem Arretiersystem.

## Revendications

1. Installation de production de peroxyde d'hydrogène, de préférence de solutions aqueuses de peroxyde d'hydrogène, par le procédé d'auto-oxydation, le procédé comprenant l'hydrogénation d'une anthraquinone dans une solution de travail, l'oxydation de l'anthraquinone hydrogénée avec de l'oxygène pour former du peroxyde d'hydrogène et l'extraction du peroxyde d'hydrogène de la solution de travail, l'installation comprenant au moins un module monté sur châssis choisi dans le groupe constitué par :
- un module monté sur châssis comprenant au moins un hydrogénateur pour hydrogéner l'anthraquinone dans la solution de travail, désigné châssis 1 ;
- un module monté sur châssis comprenant au moins un oxydateur pour oxyder l'anthraquinone hydrogénée avec de l'oxygène pour former du peroxyde d'hydrogène, désigné châssis 2 ;
- optionnellement, un module monté sur châssis comprenant au moins un moyen pour comprimer de l'air, désigné châssis 3, pour introduire de l'oxygène, en particulier l'oxygène de l'air, dans un oxydateur du châssis 2, et en cas de présence du châssis 3 un autre module monté sur châssis comprenant au moins un moyen pour récupérer le solvant, désigné châssis 4, en particulier si l'oxygène de l'air est utilisé pour introduire de l'oxygène dans un oxydateur du châssis 2 ;
- un module monté sur châssis comprenant au moins un moyen pour extraire le peroxyde d'hydrogène de la solution de travail, désigné châssis 5 ;
- un module monté sur châssis, désigné châssis 6, comprenant au moins un moyen pour livrer la solution de peroxyde d'hydrogène au point d'utilisation et/ou optionnellement à un réservoir de stockage optionnellement avec des moyens supplémentaires pour ajuster la concentration de peroxyde d'hydrogène.

2. Installation de production de peroxyde d'hydrogène, de préférence de solutions aqueuses de peroxyde d'hydrogène, par le procédé d'auto-oxydation selon la revendication 1, dans laquelle le châssis d'hydrogénation 1 comprend au moins un ou plusieurs éléments d'équipement choisis dans le groupe constitué par un hydrogénateur, un compresseur de recyclage d'hydrogène, un filtre catalyseur, un réservoir d'alimentation d'oxydateur, une pompe d'alimentation d' oxydateur et un lit de catalyseur de garde.

3. Installation de production de peroxyde d'hydrogène, de préférence de solutions aqueuses de peroxyde d'hydrogène, par le procédé d'auto-oxydation selon la revendication 1, dans laquelle le châssis d'oxydateur 2 comprend au moins un ou plusieurs éléments d'équipement choisis dans le groupe constitué par un refroidisseur de charge d'oxydateur, un oxydateur, un dégazeur, une d'alimentation-extraction, un condenseur d'effluent gazeux et un dévésiculeur d'effluent gazeux.

4. Installation de production de peroxyde d'hydrogène, de préférence de solutions aqueuses de peroxyde d'hydrogène, par le procédé d'auto-oxydation selon la revendication 1, dans laquelle le châssis d'extraction 5 comprend au moins un ou plusieurs éléments d'équipement choisis dans le groupe constitué par un refroidisseur, une pompe d'alimentation de coalesceur et d'hydrogénateur, et optionnellement une colonne d'extraction et/ou susceptible d'être raccordée à une colonne d'extraction.

5. Installation de production de peroxyde d'hydrogène, de préférence de solutions aqueuses de peroxyde d'hydrogène, par le procédé d'auto-oxydation selon la revendication 1, dans laquelle le châssis de compresseur d'air de procédé optionnel 3 comprend au moins un ou plusieurs éléments d'équipement choisis dans le groupe constitué par un ensemble de compresseurs d'air de procédé, un filtre d'aspiration d'air et un refroidisseur-condenseur final.

6. Installation de production de peroxyde d'hydrogène, de préférence de solutions aqueuses de peroxyde d'hydrogène, par le procédé d'auto-oxydation selon la revendication 1, dans laquelle le châssis d'unité de récupération de solvant optionnel 4 comprend au moins un ou plusieurs éléments d'équipement choisis dans le groupe constitué par un ensemble d'adsorption sur charbon actif, un condenseur de régénération, un décanteur de solvant/eau, une pompe de retour de solvant et une pompe de retour d'eau.

7. Installation de production de peroxyde d'hydrogène, de préférence de solutions aqueuses de peroxyde d'hydrogène, par le procédé d'auto-oxydation selon l'une quelconque des revendications 1 à 6, comprenant une unité d'alimentation en oxygène de l'air utilisée pour introduire de l'oxygène dans un oxydateur du châssis 2 et comprenant en outre au moins un module monté sur châssis choisi dans le groupe constitué par
- un module monté sur châssis comprenant au moins un hydrogénateur pour hydrogéner l'anthraquinone dans la solution de travail, désigné châssis 1 ;
- un module monté sur châssis comprenant au moins un oxydateur pour oxyder l'anthraquinone hydrogénée avec de l'oxygène pour former du peroxyde d'hydrogène, désigné châssis 2 ;
- un module monté sur châssis comprenant au moins un moyen pour comprimer de l'air, désigné châssis 3, pour introduire de l'oxygène, en particulier l'oxygène de l'air, dans un oxydateur du châssis 2, et comprenant un autre module monté sur châssis comprenant au moins un moyen pour récupérer le solvant, désigné châssis 4 ;
- un module monté sur châssis comprenant au moins un moyen pour extraire le peroxyde d'hydrogène de la solution de travail, désigné châssis 5 ;
- un module monté sur châssis, désigné châssis 6, comprenant au moins un moyen pour livrer la solution de peroxyde d'hydrogène au point d'utilisation et/ou optionnellement à un réservoir de stockage optionnellement avec des moyens supplémentaires pour ajuster la concentration de peroxyde d'hydrogène.

8. Installation de production de peroxyde d'hydrogène, de préférence de solutions aqueuses de peroxyde d'hydrogène, par le procédé d'auto-oxydation selon l'une quelconque des revendications 1 à 7, **caractérisée en ce que** le châssis d'hydrogénation 1, le châssis d'oxydation 2 et le châssis d'extraction 5, conjointement avec tout châssis optionnel, sont conçus comme un système de réacteurs modulaire, de préférence comme un système de réacteurs modulaire compact, qui est configuré pour fonctionner comme une installation de procédé AO de petite à moyenne échelle avec une capacité de production de peroxyde d'hydrogène allant jusqu'à 20 kilotonnes par an, de préférence avec une capacité de production de peroxyde d'hydrogène allant jusqu'à 15 kilotonnes par an, et mieux encore avec une capacité de production de peroxyde d'hydrogène allant jusqu'à 10 kilotonnes par an.

9. Installation de production de peroxyde d'hydrogène, de préférence de solutions aqueuses de peroxyde d'hydrogène, par le procédé d'auto-oxydation selon l'une quelconque des revendications 1 à 8, **caractérisée en ce qu'**un ou plusieurs desdits châssis 1 à 6 sont équipés d'un ou plusieurs capteurs pour surveiller un ou plusieurs paramètres du procédé AO tels que la pression, la température, la quantité, le débit, la masse volumique, la viscosité, l'activité du catalyseur, l'acidité, la pureté, la concentration, la productivité en peroxyde d'hydrogène ou d'autres paramètres de procédé pertinents pour la production de peroxyde d'hydrogène selon le procédé AO.

10. Installation de production de peroxyde d'hydrogène, de préférence de solutions aqueuses de peroxyde d'hydrogène, par le procédé d'auto-oxydation selon l'une quelconque des revendications 1 à 9, **caractérisée en ce qu'**un ou plusieurs desdits châssis 1 à 6 sont équipés d'un équipement de sécurité ou de moyens de sécurité pour permettre un arrêt sûr automatique, de préférence un PLC de sécurité ou une couche de protection indépendante, ou un système basé sur des relais câblés pour la surveillance et l'arrêt sûr automatique ou système de verrouillage.
